# EUROPEAN PATENT APPLICATION

(11) **EP 3 099 103 A1**
(43) Date of publication of application: **30.11.2016**
(21) Application number: 14882229.9
(22) Date of filing: 11.02.2014
(51) Int. Cl.: H04W 28/12

(54) **METHOD AND DEVICE FOR OBTAINING UNAUTHORIZED-FREQUENCY INFORMATION**

(71) Applicant: Huawei Technologies Co., Ltd., Longgang District Shenzhen, Guangdong 518129 (CN)
(72) Inventor: YANG, Xiaodong, Shenzhen, Guangdong 518129 (CN); QUAN, Wei, Shenzhen, Guangdong 518129 (CN); LI, Bingzhao, Shenzhen, Guangdong 518129 (CN); HU, Zhenxing, Shenzhen, Guangdong 518129 (CN); ZHANG, Jian, Shenzhen, Guangdong 518129 (CN)
(74) Representative: Maiwald Patentanwalts GmbH
(86) International application number: PCT/CN2014/071977
(87) International publication number: WO 2015/120578

(57) **Abstract**

Embodiments of the present invention provide a method for obtaining unlicensed frequency information and a device. The method includes: obtaining, by UE, measurement information of a first signal in an unlicensed frequency, and recording the measurement information of the first signal; and reporting, by the UE, the recorded measurement information to a base station. In addition, the method may further include: receiving, by the UE, third indication information sent by the base station, where the third indication information is used to enable the UE to obtain use information of the unlicensed frequency and report use information, obtained within a preset time, of the unlicensed frequency; obtaining, by the UE, the use information of the unlicensed frequency according to the third indication information; and reporting the use information, obtained within the preset time, of the unlicensed frequency to the base station. By means of the method, the base station can obtain related information of an unlicensed frequency by using the UE. Therefore, the UE can perform communication by properly using the unlicensed frequency.

## Description

### TECHNICAL FIELD

Embodiments of the present invention relate to communications technologies, and in particular, to a method for obtaining unlicensed frequency information and a device.

### BACKGROUND

Spectrum management (spectrum management) is a spectrum planning method established to effectively use a radio frequency. In existing spectrum management, a particular mobile operator or mobile technology (for example, Universal Mobile Telecommunications System (Universal Mobile Telecommunications System, UMTS for short), or Long Term Evolution (Long Term Evolution, LTE for short)) is licensed to use a part of spectrum, where the part of spectrum is referred to as a licensed spectrum (licensed spectrum). A part of spectrum is also allocated to unlicensed user equipment (User Equipment, UE for short) for use. In this part of spectrum, different wireless devices may share frequency resources, where the spectrum is referred to as an unlicensed spectrum (unlicensed spectrum). An existing local area network (Wireless Fidelity, WiFi for short) device mostly works in an unlicensed spectrum.

Currently, an unlicensed spectrum has relatively low frequency band utilization, but meanwhile, user equipment has greater requirements on a mobile broadband. Therefore, the mobile operator needs more spectrum resources to satisfy requirements of the UE, to resolve an existing problem that the current licensed spectrum cannot fully satisfy communication service requirements of the UE.

However, because a mobile operator cannot learn use information and occupation information of an unlicensed spectrum, and further cannot efficiently use the unlicensed spectrum to provide a communication service for the UE. How to obtain use information and occupation information of an unlicensed spectrum becomes a technical problem currently to be resolved.

### SUMMARY

Embodiments of the present invention provide a method for obtaining unlicensed frequency information and a device, to obtain related information of an unlicensed spectrum, so that UE can perform communication by properly using the unlicensed spectrum.

According to a first aspect, an embodiment of the present invention provides user equipment, including:
an obtaining unit, configured to obtain measurement information of at least one first signal in an unlicensed frequency; and
a sending unit, configured to: after the obtaining unit successfully obtains the measurement information of the at least one first signal, report the measurement information of the at least one first signal to a base station, where
the first signal is a signal sent by the base station to the user equipment UE by using the unlicensed frequency.

With reference to the first aspect, in a first possible implementation manner, the sending unit is specifically configured to:
after the obtaining unit successfully obtains the measurement information of the at least one first signal, report the measurement information of the at least one first signal to the base station by using a licensed frequency; or
after the obtaining unit successfully obtains the measurement information of the at least one first signal, report the measurement information of the at least one first signal to the base station by using an unlicensed frequency.

With reference to the first aspect, in a second possible implementation manner, the user equipment further includes a receiving unit, where
the receiving unit is configured to: before the obtaining unit successfully obtains the measurement information of the at least one first signal, receive first indication information sent by the base station, where the first indication information is used to enable the UE to report the measurement information of the first signal; and
the sending unit is specifically configured to report the measurement information of the at least one first signal to the base station according to the first indication information received by the receiving unit; and/or
the receiving unit is configured to: before the obtaining unit successfully obtains the measurement information of the at least one first signal and when the UE is in a connected state, receive a first notification message that is sent by the base station by using a licensed frequency, where the first notification message is used to enable the UE to obtain, when in a connected state, the measurement information of the at least one first signal in the unlicensed frequency; and
the obtaining unit is specifically configured to obtain the measurement information of the at least one first signal in the unlicensed frequency when the UE is in a connected state and according to the first notification message received by the receiving unit; and/or
the receiving unit is configured to: before the obtaining unit successfully obtains the measurement information of the at least one first signal and when the UE is in a connected state, receive a second notification message that is sent by the base station by using a licensed frequency, where the second notification message is used to enable the UE to obtain, when in an idle state, the measurement information of the at least one first signal in the unlicensed frequency; and
the obtaining unit is specifically configured to obtain the measurement information of the at least one first signal in the unlicensed frequency when the UE is in an idle state and according to the second notification message received by the receiving unit; and/or
the receiving unit is further configured to: before the obtaining unit successfully obtains the measurement information of the at least one first signal, receive a third notification message sent by the base station, where the third notification message is used to enable the UE to obtain measurement information of at least one second signal in a licensed frequency, and the second signal is a cell reference signal in the licensed frequency;
the obtaining unit is further configured to obtain the measurement information of the second signal in the licensed frequency according to the third notification message received by the receiving unit; and
the sending unit is further configured to: after the obtaining unit successfully obtains the measurement information of the at least one second signal, report the measurement information of the at least one second signal and the measurement information of the at least one first signal to the base station.

With reference to the first aspect or the foregoing possible implementation manners of the first aspect, in a third possible implementation manner, the sending unit is specifically configured to:
after the obtaining unit successfully obtains the measurement information of the at least one first signal and when the measurement information of the at least one first signal is less than a preset threshold, report the measurement information of the at least one first signal to the base station; or
after the obtaining unit successfully obtains the measurement information of the at least one first signal and when the measurement information of the first signal reaches measurement information of a preset period, report measurement information of all first signals within the preset period to the base station.

With reference to the first aspect or the foregoing possible implementation manners of the first aspect, in a fourth possible implementation manner, the sending unit is further configured to:
when the obtaining unit has not obtained the measurement information of the at least one first signal that is sent by the base station by using the unlicensed frequency, send a first message to the base station, where the first message includes information used to indicate that the UE has not obtained the measurement information of the first signal, and/or measurement information, which is already successfully obtained by the UE a time period before the UE sends the first message, of at least one first signal; or
when the obtaining unit fails to detect the at least one first signal that is sent by the base station by using the unlicensed frequency, send a second message to the base station, where the second message includes information used to indicate that the UE fails to detect the first signal, and/or measurement information, which is already successfully obtained by the UE a time period before the UE sends the second message, of at least one first signal.

With reference to the first aspect or the foregoing possible implementation manners of the first aspect, in a fifth possible implementation manner, the first signal is one or more of the following signals:
a primary synchronization signal PSS, a secondary synchronization signal SSS, a discovery signal, or a beacon signal.

With reference to the first aspect or the foregoing possible implementation manners of the first aspect, in a sixth possible implementation manner, the measurement information of the first signal is one or more of the following information:
signal received power RSRP or signal received quality RSRQ.

With reference to the first aspect, in a seventh possible implementation manner, the user equipment further includes a receiving unit, where
the receiving unit is configured to: after the sending unit reports the measurement information of the at least one first signal, receive second indication information sent by the base station, where the second indication information is used to enable the UE to obtain use information of the unlicensed frequency and report use information, obtained within a preset time, of the unlicensed frequency;
the obtaining unit is configured to obtain the use information of the unlicensed frequency according to the second indication information received by the receiving unit; and
the sending unit is configured to: after the obtaining unit obtains the use information of the unlicensed frequency, report the use information, obtained within the preset time, of the unlicensed frequency to the base station.

With reference to the first aspect or the seventh possible implementation manner of the first aspect, in an eighth possible implementation manner, the obtaining unit is specifically configured to:
obtain the use information of the unlicensed frequency when the UE is in a connected state and according to the second indication information received by the receiving unit; or
obtain the use information of the unlicensed frequency when the UE is in an idle state and according to the second indication information received by the receiving unit.

With reference to the first aspect or the seventh or eighth possible implementation manner of the first aspect, in a ninth possible implementation manner, the sending unit is specifically configured to:
after the obtaining unit obtains the use information of the unlicensed frequency, report the use information, obtained within the preset time, of the unlicensed frequency to the base station by using a licensed frequency; or
after the obtaining unit obtains the use information of the unlicensed frequency, report the use information, obtained within the preset time, of the unlicensed frequency to the base station by using an unlicensed frequency.

With reference to the first aspect or the seventh, eighth, or ninth possible implementation manner of the first aspect, in a tenth possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a second aspect, an embodiment of the present invention provides user equipment, including:
a receiving unit, configured to receive third indication information sent by a base station, where the third indication information is used to enable the user equipment UE to obtain use information of an unlicensed frequency and report use information, obtained within a preset time, of the unlicensed frequency;
an obtaining unit, configured to obtain the use information of the unlicensed frequency according to the third indication information received by the receiving unit; and
a sending unit, configured to: after the obtaining unit obtains the use information of the unlicensed frequency, report the use information, obtained within the preset time, of the unlicensed frequency to the base station.

With reference to the second aspect, in a first possible implementation manner, the obtaining unit is specifically configured to:
obtain the use information of the unlicensed frequency when the UE is in a connected state and according to the third indication information received by the receiving unit; or
obtain the use information of the unlicensed frequency when the UE is in an idle state and according to the third indication information received by the receiving unit.

With reference to the second aspect or the first possible implementation manner of the second aspect, in a second possible implementation manner, the sending unit is specifically configured to:
after the obtaining unit obtains the use information of the unlicensed frequency, report the use information, obtained within the preset time, of the unlicensed frequency to the base station by using a licensed frequency; or
after the obtaining unit obtains the use information of the unlicensed frequency, report the use information, obtained within the preset time, of the unlicensed frequency to the base station by using an unlicensed frequency.

With reference to the second aspect or the foregoing possible implementation manners of the second aspect, in a third possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a third aspect, an embodiment of the present invention provides a communications device, including:
a sending unit, configured to send at least one first signal to user equipment UE by using an unlicensed frequency; and
a receiving unit, configured to: after the sending unit sends the at least one first signal, receive measurement information reported by the UE, where the measurement information is measurement information of the at least one first signal successfully obtained by the UE.

With reference to the third aspect, in a first possible implementation manner, the receiving unit is specifically configured to:
after the sending unit sends the at least one first signal, receive the measurement information that is reported by the UE by using a licensed frequency; or
after the sending unit sends the at least one first signal, receive the measurement information that is reported by the UE by using an unlicensed frequency.

With reference to the third aspect, in a second possible implementation manner, the sending unit is further configured to:
before the receiving unit receives the measurement information reported by the UE, send first indication information to the UE, where the first indication information is used to enable the UE to report the measurement information of the at least one first signal; and
the receiving unit is specifically configured to:
   after the sending unit sends the first indication information, receive the measurement information that is reported by the UE according to the first indication information.

With reference to the third aspect or the first possible implementation manner of the third aspect, in a third possible implementation manner, the receiving unit is specifically configured to:
after the sending unit sends the at least one first signal, receive the measurement information reported by the UE, where the measurement information is sent by the UE when the UE determines that the measurement information of the at least one first signal is less than a preset threshold; or
after the sending unit sends the at least one first signal, receive the measurement information reported by the UE, where the measurement information is sent by the UE when the UE determines that the measurement information of the first signal reaches measurement information of a preset period.

With reference to the third aspect or the foregoing possible implementation manners of the third aspect, in a fourth possible implementation manner, the sending unit is further configured to:
before sending the at least one first signal, send a first notification message to the UE in a connected state by using a licensed frequency, where the first notification message is used to enable the UE to obtain, when in a connected state, the measurement information of the at least one first signal in the unlicensed frequency.

With reference to the third aspect or the foregoing possible implementation manners of the third aspect, in a fifth possible implementation manner, the sending unit is further configured to:
before sending the at least one first signal, send a second notification message to the UE in a connected state by using a licensed frequency, where the second notification message is used to enable the UE to obtain, when in an idle state, the measurement information of the at least one first signal in the unlicensed frequency.

With reference to the third aspect or the first possible implementation manner of the third aspect, in a sixth possible implementation manner, the sending unit is further configured to:
before sending the at least one first signal, send a third notification message to the UE by using a licensed frequency, where the third notification message is used to enable the UE to obtain measurement information of a second signal in the licensed frequency, and the second signal is a cell reference signal in the licensed frequency; and
the receiving unit is specifically configured to: after the sending unit sends the third notification message, receive the measurement information of the second signal and the measurement information of the first signal that are reported by the UE.

With reference to the third aspect or the first possible implementation manner of the third aspect, in a seventh possible implementation manner, the receiving unit is further configured to:
after the sending unit sends the at least one first signal, receive a first message sent by the UE, where the first message is sent by the UE after the UE has not obtained the measurement information of the at least one first signal in the unlicensed frequency, and the first message includes information used to indicate that the UE has not obtained the measurement information of the first signal, and/or measurement information, which is already successfully obtained by the UE a time period before the UE sends the first message, of at least one first signal; or
after the sending unit sends the at least one first signal, receive a second message sent by the UE, where the second message is sent by the UE after the UE fails to detect the at least one first signal in the unlicensed frequency, and the second message includes information used to indicate that the UE fails to detect the first signal, and/or measurement information, which is already successfully obtained by the UE a time period before the UE sends the second message, of at least one first signal.

With reference to the third aspect or the foregoing possible implementation manners of the third aspect, in an eighth possible implementation manner, the first signal is one or more of the following signals:
a primary synchronization signal PSS, a secondary synchronization signal SSS, a discovery signal, or a beacon signal.

With reference to the third aspect or the foregoing possible implementation manners of the third aspect, in a ninth possible implementation manner, the measurement information of the first signal is one or more of the following information:
signal received power RSRP or signal received quality RSRQ.

With reference to the third aspect, in a tenth possible implementation manner, the sending unit is further configured to:
after the receiving unit receives the measurement information of the at least one first signal, send second indication information to the UE, where the second indication information is used to enable the UE to obtain use information of the unlicensed frequency and report use information, obtained within a preset time, of the unlicensed frequency; and
the receiving unit is further configured to:
   after the sending unit sends the second indication information, receive the use information reported by the UE, where the use information is use information, which is obtained by the UE within the preset time according to the second indication information, of the unlicensed frequency.

With reference to the third aspect or the tenth possible implementation manner of the third aspect, in an eleventh possible implementation manner, the receiving unit is further configured to:
after the sending unit sends the second indication information, receive the use information that is reported by the UE by using a licensed frequency; or
after the sending unit sends the second indication information, receive the use information that is reported by the UE by using an unlicensed frequency.

With reference to the third aspect or the tenth or eleventh possible implementation manner of the third aspect, in a twelfth possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a fourth aspect, an embodiment of the present invention provides a communications device, including:
a sending unit, configured to send third indication information to user equipment UE; and
a receiving unit, configured to: after the sending unit sends the third indication information, receive use information reported by the UE, where the use information is use information, which is obtained by the UE within a preset time according to the third indication information, of an unlicensed frequency.

With reference to the fourth aspect, in a first possible implementation manner, the receiving unit is specifically configured to:
after the sending unit sends the third indication information, receive the use information that is reported by the UE by using a licensed frequency; or
after the sending unit sends the third indication information, receive the use information that is reported by the UE by using an unlicensed frequency.

With reference to the fourth aspect or the first possible implementation manner of the fourth aspect, in a second possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a fifth aspect, an embodiment of the present invention provides user equipment, including:
a transmitter and a processor, where
the processor is configured to obtain measurement information of at least one first signal in an unlicensed frequency; and
the transmitter is configured to: after the processor successfully obtains the measurement information of the at least one first signal, report the measurement information of the at least one first signal to a base station, where
the first signal is a signal sent by the base station to the user equipment UE by using the unlicensed frequency.

With reference to the fifth aspect, in a first possible implementation manner, the transmitter is specifically configured to:
after the processor successfully obtains the measurement information of the at least one first signal, report the measurement information of the at least one first signal to the base station by using a licensed frequency; or
after the processor successfully obtains the measurement information of the at least one first signal, report the measurement information of the at least one first signal to the base station by using an unlicensed frequency.

With reference to the fifth aspect, in a second possible implementation manner, the user equipment further includes a receiver, where
the receiver is configured to: before the processor successfully obtains the measurement information of the at least one first signal, receive first indication information sent by the base station, where the first indication information is used to enable the UE to report the measurement information of the first signal; and
the transmitter is specifically configured to report the measurement information of the at least one first signal to the base station according to the first indication information received by the receiver; and/or
the receiver is configured to: before the processor successfully obtains the measurement information of the at least one first signal and when the UE is in a connected state, receive a first notification message that is sent by the base station by using a licensed frequency, where the first notification message is used to enable the UE to obtain, when in a connected state, the measurement information of the at least one first signal in the unlicensed frequency; and
the processor is specifically configured to obtain the measurement information of the at least one first signal in the unlicensed frequency when the UE is in a connected state and according to the first notification message received by the receiver; and/or
the receiver is configured to: before the processor successfully obtains the measurement information of the at least one first signal and when the UE is in a connected state, receive a second notification message that is sent by the base station by using a licensed frequency, where the second notification message is used to enable the UE to obtain, when in an idle state, the measurement information of the at least one first signal in the unlicensed frequency; and
the processor is specifically configured to obtain the measurement information of the at least one first signal in the unlicensed frequency when the UE is in an idle state and according to the second notification message received by the receiver; and/or
the receiver is further configured to: before the processor successfully obtains the measurement information of the at least one first signal, receive a third notification message sent by the base station, where the third notification message is used to enable the UE to obtain measurement information of at least one second signal in a licensed frequency, and the second signal is a cell reference signal in the licensed frequency;
the processor is further configured to obtain the measurement information of the second signal in the licensed frequency according to the third notification message received by the receiver; and
the transmitter is further configured to: after the processor successfully obtains the measurement information of the at least one second signal, report the measurement information of the at least one second signal and the measurement information of the at least one first signal to the base station.

With reference to the fifth aspect or the foregoing possible implementation manners of the fifth aspect, in a third possible implementation manner, the transmitter is specifically configured to:
after the processor successfully obtains the measurement information of the at least one first signal and when the measurement information of the at least one first signal is less than a preset threshold, report the measurement information of the at least one first signal to the base station; or
after the processor successfully obtains the measurement information of the at least one first signal and when the measurement information of the first signal reaches measurement information of a preset period, report measurement information of all first signals within the preset period to the base station.

With reference to the fifth aspect or the foregoing possible implementation manners of the fifth aspect, in a fourth possible implementation manner, the transmitter is further configured to:
when the processor has not obtained the measurement information of the at least one first signal that is sent by the base station by using the unlicensed frequency, send a first message to the base station, where the first message includes information used to indicate that the UE has not obtained the measurement information of the first signal, and/or measurement information, which is already successfully obtained by the UE a time period before the UE sends the first message, of at least one first signal; or
when the processor fails to detect the at least one first signal that is sent by the base station by using the unlicensed frequency, send a second message to the base station, where the second message includes information used to indicate that the UE fails to detect the first signal, and/or measurement information, which is already successfully obtained by the UE a time period before the UE sends the second message, of at least one first signal.

With reference to the fifth aspect or the foregoing possible implementation manners of the fifth aspect, in a fifth possible implementation manner, the first signal is one or more of the following signals:
a primary synchronization signal PSS, a secondary synchronization signal SSS, a discovery signal, or a beacon signal.

With reference to the fifth aspect or the foregoing possible implementation manners of the fifth aspect, in a sixth possible implementation manner, the measurement information of the first signal is one or more of the following information:
signal received power RSRP or signal received quality RSRQ.

With reference to the fifth aspect, in a seventh possible implementation manner, the user equipment further includes a receiver, where
the receiver is configured to: after the transmitter reports the measurement information of the at least one first signal, receive second indication information sent by the base station, where the second indication information is used to enable the UE to obtain use information of the unlicensed frequency and report use information, obtained within a preset time, of the unlicensed frequency;
the processor is configured to obtain the use information of the unlicensed frequency according to the second indication information received by the receiver; and
the transmitter is configured to: after the processor obtains the use information of the unlicensed frequency, report the use information, obtained within the preset time, of the unlicensed frequency to the base station.

With reference to the fifth aspect or the seventh possible implementation manner of the fifth aspect, in an eighth possible implementation manner, the processor is specifically configured to:
obtain the use information of the unlicensed frequency when the UE is in a connected state and according to the second indication information received by the receiver; or
obtain the use information of the unlicensed frequency when the UE is in an idle state and according to the second indication information received by the receiver.

With reference to the fifth aspect or the seventh or eighth possible implementation manner of the fifth aspect, in a ninth possible implementation manner, the transmitter is specifically configured to:
after the processor obtains the use information of the unlicensed frequency, report the use information, obtained within the preset time, of the unlicensed frequency to the base station by using a licensed frequency; or
after the processor obtains the use information of the unlicensed frequency, report the use information, obtained within the preset time, of the unlicensed frequency to the base station by using an unlicensed frequency.

With reference to the fifth aspect or the seventh, eighth, or ninth possible implementation manner of the fifth aspect, in a tenth possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a sixth aspect, an embodiment of the present invention provides user equipment, including:
a receiver, configured to receive third indication information sent by a base station, where the third indication information is used to enable the user equipment UE to obtain use information of an unlicensed frequency and report use information, obtained within a preset time, of the unlicensed frequency;
a processor, configured to obtain the use information of the unlicensed frequency according to the third indication information received by the receiver; and
a transmitter, configured to: after the processor obtains the use information of the unlicensed frequency, report the use information, obtained within the preset time, of the unlicensed frequency to the base station.

With reference to the sixth aspect, in a first possible implementation manner, the processor is specifically configured to:
obtain the use information of the unlicensed frequency when the UE is in a connected state and according to the third indication information received by the receiver; or
obtain the use information of the unlicensed frequency when the UE is in an idle state and according to the third indication information received by the receiver.

With reference to the sixth aspect or the first possible implementation manner of the sixth aspect, in a second possible implementation manner, the transmitter is specifically configured to:
after the processor obtains the use information of the unlicensed frequency, report the use information, obtained within the preset time, of the unlicensed frequency to the base station by using a licensed frequency; or
after the processor obtains the use information of the unlicensed frequency, report the use information, obtained within the preset time, of the unlicensed frequency to the base station by using an unlicensed frequency.

With reference to the sixth aspect or the foregoing possible implementation manners of the sixth aspect, in a third possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a seventh aspect, an embodiment of the present invention provides a communications device, including:
a transmitter, configured to send at least one first signal to user equipment UE by using an unlicensed frequency; and
a receiver, configured to: after the transmitter sends the at least one first signal, receive measurement information reported by the UE, where the measurement information is measurement information of the at least one first signal successfully obtained by the UE.

With reference to the seventh aspect, in a first possible implementation manner, the receiver is specifically configured to:
after the transmitter sends the at least one first signal, receive the measurement information that is reported by the UE by using a licensed frequency; or
after the transmitter sends the at least one first signal, receive the measurement information that is reported by the UE by using an unlicensed frequency.

With reference to the seventh aspect, in a second possible implementation manner, the transmitter is further configured to:
before the receiver receives the measurement information reported by the UE, send first indication information to the UE, where the first indication information is used to enable the UE to report the measurement information of the at least one first signal; and
the receiver is specifically configured to:
   after the transmitter sends the first indication information, receive the measurement information that is reported by the UE according to the first indication information.

With reference to the seventh aspect or the first possible implementation manner of the seventh aspect, in a third possible implementation manner, the receiver is specifically configured to:
after the transmitter sends the at least one first signal, receive the measurement information reported by the UE, where the measurement information is sent by the UE when the UE determines that the measurement information of the at least one first signal is less than a preset threshold; or
after the transmitter sends the at least one first signal, receive the measurement information reported by the UE, where the measurement information is sent by the UE when the UE determines that the measurement information of the first signal reaches measurement information of a preset period.

With reference to the seventh aspect or the foregoing possible implementation manners of the seventh aspect, in a fourth possible implementation manner, the transmitter is further configured to:
before sending the at least one first signal, send a first notification message to the UE in a connected state by using a licensed frequency, where the first notification message is used to enable the UE to obtain, when in a connected state, the measurement information of the at least one first signal in the unlicensed frequency.

With reference to the seventh aspect or the first, second, third, or fourth possible implementation manner of the seventh aspect, in a fifth possible implementation manner, the transmitter is further configured to:
before sending the at least one first signal, send a second notification message to the UE in a connected state by using a licensed frequency, where the second notification message is used to enable the UE to obtain, when in an idle state, the measurement information of the at least one first signal in the unlicensed frequency.

With reference to the seventh aspect or the first possible implementation manner of the seventh aspect, in a sixth possible implementation manner, the transmitter is further configured to:
before sending the at least one first signal, send a third notification message to the UE by using a licensed frequency, where the third notification message is used to enable the UE to obtain measurement information of a second signal in the licensed frequency, and the second signal is a cell reference signal in the licensed frequency; and
the receiver is specifically configured to: after the transmitter sends the third notification message, receive the measurement information of the second signal and the measurement information of the first signal that are reported by the UE.

With reference to the seventh aspect or the first possible implementation manner of the seventh aspect, in a seventh possible implementation manner, the receiver is further configured to:
after the transmitter sends the at least one first signal, receive a first message sent by the UE, where the first message is sent by the UE after the UE has not obtained the measurement information of the at least one first signal in the unlicensed frequency, and the first message includes information used to indicate that the UE has not obtained the measurement information of the first signal, and/or measurement information, which is already successfully obtained by the UE a time period before the UE sends the first message, of at least one first signal; or
after the transmitter sends the at least one first signal, receive a second message sent by the UE, where the second message is sent by the UE after the UE fails to detect the at least one first signal in the unlicensed frequency, and the second message includes information used to indicate that the UE fails to detect the first signal, and/or measurement information, which is already successfully obtained by the UE a time period before the UE sends the second message, of at least one first signal.

With reference to the seventh aspect or the foregoing possible implementation manners of the seventh aspect, in an eighth possible implementation manner, the first signal is one or more of the following signals:
a primary synchronization signal PSS, a secondary synchronization signal SSS, a discovery signal, or a beacon signal.

With reference to the seventh aspect or the foregoing possible implementation manners of the seventh aspect, in a ninth possible implementation manner, the measurement information of the first signal is one or more of the following information:
signal received power RSRP or signal received quality RSRQ.

With reference to the seventh aspect, in a tenth possible implementation manner, the transmitter is further configured to:
after the receiver receives the measurement information of the at least one first signal, send second indication information to the UE, where the second indication information is used to enable the UE to obtain use information of the unlicensed frequency and report use information, obtained within a preset time, of the unlicensed frequency; and
the receiver is further configured to:
   after the transmitter sends the second indication information, receive the use information reported by the UE, where the use information is use information, which is obtained by the UE within the preset time according to the second indication information, of the unlicensed frequency.

With reference to the seventh aspect or the tenth possible implementation manner of the seventh aspect, in an eleventh possible implementation manner, the receiver is further configured to:
after the transmitter sends the second indication information, receive the use information that is reported by the UE by using a licensed frequency; or
after the transmitter sends the second indication information, receive the use information that is reported by the UE by using an unlicensed licensed frequency.

With reference to the seventh aspect or any one of the first to the eleventh possible implementation manners of the seventh aspect, in a twelfth possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to an eighth aspect, an embodiment of the present invention provides a communications device, including:
a transmitter, configured to send third indication information to user equipment UE; and
a receiver, configured to: after the transmitter sends the third indication information, receive use information reported by the UE, where the use information is use information, which is obtained by the UE within a preset time according to the third indication information, of an unlicensed frequency.

With reference to the eighth aspect, in a first possible implementation manner, the receiver is specifically configured to:
after the transmitter sends the third indication information, receive the use information that is reported by the UE by using a licensed frequency; or
after the transmitter sends the third indication information, receive the use information that is reported by the UE by using an unlicensed licensed frequency.

With reference to the eighth aspect or the first possible implementation manner of the eighth aspect, in a second possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a ninth aspect, an embodiment of the present invention provides a method for obtaining unlicensed frequency information, including:
obtaining, by user equipment UE, measurement information of at least one first signal in an unlicensed frequency; and
after the UE successfully obtains the measurement information of the at least one first signal, reporting the measurement information of the at least one first signal to the base station, where
the first signal is a signal sent by the base station to the UE by using the unlicensed frequency.

With reference to the ninth aspect, in a first possible implementation manner, the reporting the measurement information of the at least one first signal to a base station includes:
reporting the measurement information of the at least one first signal to the base station by using a licensed frequency; or
reporting the measurement information of the at least one first signal to the base station by using an unlicensed frequency.

With reference to the ninth aspect, in a second possible implementation manner, before the reporting the measurement information of the at least one first signal to a base station, the method further includes:
receiving, by the UE, first indication information sent by the base station, where the first indication information is used to enable the UE to report the measurement information of the first signal; and
correspondingly, the reporting the measurement information of the at least one first signal to a base station is specifically:
   reporting, by the UE, the measurement information of the first signal to the base station according to the first indication information.

With reference to the ninth aspect or the foregoing possible implementation manners of the ninth aspect, in a third possible implementation manner, the reporting the measurement information of the at least one first signal to a base station includes:
when the measurement information of the at least one first signal is less than a preset threshold, reporting the measurement information of the at least one first signal to the base station; or
when the measurement information of the first signal reaches measurement information of a preset period, reporting measurement information of all signals within the preset period to the base station.

With reference to the ninth aspect or the foregoing possible implementation manners of the ninth aspect, in a fourth possible implementation manner, before the obtaining, by UE, measurement information of at least one first signal in an unlicensed frequency, the method further includes:
when the UE is in a connected state, receiving a first notification message that is sent by the base station by using a licensed frequency, where the first notification message is used to enable the UE to obtain, when in a connected state, the measurement information of the at least one first signal in the unlicensed frequency; and
the obtaining, by UE, measurement information of at least one first signal in an unlicensed frequency is specifically:
   obtaining, by the UE, the measurement information of the at least one first signal when the UE is in a connected state and according to the first notification message.

With reference to the ninth aspect or the first to the third possible implementation manners of the ninth aspect, in a fifth possible implementation manner, before the obtaining, by UE, measurement information of at least one first signal in an unlicensed frequency, the method further includes:
when the UE is in a connected state, receiving a second notification message that is sent by the base station by using a licensed frequency, where the second notification message is used to enable the UE to obtain, when in an idle state, the measurement information of the at least one first signal in the unlicensed frequency; and
the obtaining, by UE, measurement information of at least one first signal in an unlicensed frequency is specifically:
   obtaining, by the UE, the measurement information of the at least one first signal when the UE is in an idle state and according to the second notification message.

With reference to the ninth aspect or the first possible implementation manner of the ninth aspect, in a sixth possible implementation manner, before the obtaining, by UE, measurement information of at least one first signal in an unlicensed frequency, the method further includes:
receiving, by the UE, a third notification message sent by the base station, where the third notification message is used to enable the UE to obtain measurement information of at least one second signal in a licensed frequency, and the second signal is a cell reference signal in the licensed frequency; and
obtaining, by the UE, the measurement information of the second signal in the licensed frequency according to the third notification message; and
correspondingly, the reporting the measurement information of the at least one first signal to a base station includes:
   reporting the measurement information of the at least one second signal and the measurement information of the at least one first signal to the base station.

With reference to the ninth aspect or the first possible implementation manner of the ninth aspect, in a seventh possible implementation manner, the method further includes:
if the UE has not obtained the measurement information of the at least one first signal that is sent by the base station by using the unlicensed frequency, sending a first message to the base station, where the first message includes information used to indicate that the UE has not obtained the measurement information of the first signal, and/or measurement information, which is already successfully obtained by the UE a time period before the UE sends the first message, of at least one first signal; or
if the UE fails to detect the at least one first signal that is sent by the base station by using the unlicensed frequency, send a second message to the base station, where the second message includes information used to indicate that the UE fails to detect the first signal, and/or measurement information, which is already successfully obtained by the UE a time period before the UE sends the second message, of at least one first signal.

With reference to the ninth aspect or the foregoing possible implementation manners of the ninth aspect, in an eighth possible implementation manner, the first signal is one or more of the following signals:
a primary synchronization signal PSS, a secondary synchronization signal SSS, a discovery signal, or a beacon signal.

With reference to the ninth aspect or the foregoing possible implementation manners of the ninth aspect, in a ninth possible implementation manner, the measurement information of the first signal is one or more of the following information:
signal received power RSRP or signal received quality RSRQ.

With reference to the ninth aspect, in a tenth possible implementation manner, the method further includes:
receiving, by the UE, second indication information sent by the base station, where the second indication information is used to enable the UE to obtain use information of the unlicensed frequency and report use information, obtained within a preset time, of the unlicensed frequency;
obtaining, by the UE, the use information of the unlicensed frequency according to the second indication information; and
reporting the use information, obtained within the preset time, of the unlicensed frequency to the base station.

With reference to the ninth aspect or the tenth possible implementation manner of the ninth aspect, in an eleventh possible implementation manner, the obtaining, by the UE, the use information of the unlicensed frequency according to the second indication information includes:
obtaining, by the UE, the use information of the unlicensed frequency when the UE is in a connected state and according to the second indication information; or
obtaining, by the UE, the use information of the unlicensed frequency when the UE is in an idle state and according to the second indication information.

With reference to the ninth aspect or the tenth or eleventh possible implementation manner of the ninth aspect, in a twelfth possible implementation manner, the reporting the use information, obtained within the preset time, of the unlicensed frequency to the base station includes:
reporting the use information, obtained within the preset time, of the unlicensed frequency to the base station by using a licensed frequency; or
reporting the use information, obtained within the preset time, of the unlicensed frequency to the base station by using an unlicensed frequency.

With reference to the ninth aspect or any one of the tenth to the twelfth possible implementation manners of the ninth aspect, in a thirteenth possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a tenth aspect, an embodiment of the present invention provides a method for obtaining unlicensed frequency information, including:
receiving, by user equipment UE, third indication information sent by a base station, where the third indication information is used to enable the UE to obtain use information of an unlicensed frequency and report use information, obtained within a preset time, of the unlicensed frequency;
obtaining, by the UE, the use information of the unlicensed frequency according to the third indication information; and
reporting the use information, obtained within the preset time, of the unlicensed frequency to the base station.

With reference to the tenth aspect, in a first possible implementation manner, the obtaining, by the UE, the use information of the unlicensed frequency according to second indication information includes:
obtaining, by the UE, the use information of the unlicensed frequency when the UE is in a connected state and according to the second indication information; or
obtaining, by the UE, the use information of the unlicensed frequency when the UE is in an idle state and according to the second indication information.

With reference to the tenth aspect or the first possible implementation manner of the tenth aspect, in a second possible implementation manner, the reporting the use information, obtained within the preset time, of the unlicensed frequency to the base station includes:
reporting the use information, obtained within the preset time, of the unlicensed frequency to the base station by using a licensed frequency; or
reporting the use information, obtained within the preset time, of the unlicensed frequency to the base station by using an unlicensed frequency.

With reference to the tenth aspect or the foregoing possible implementation manners of the tenth aspect, in a third possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to an eleventh aspect, an embodiment of the present invention provides a method for obtaining unlicensed frequency information, including:
sending, by a base station, at least one first signal to user equipment UE by using an unlicensed frequency and receiving, by the base station, measurement information reported by the UE, where the measurement information is measurement information of the at least one first signal successfully obtained by the UE.

With reference to the eleventh aspect, in a first possible implementation manner, the receiving, by the base station, measurement information reported by the UE includes:
receiving, by the base station, the measurement information that is reported by the UE by using a licensed frequency; or
receiving, by the base station, the measurement information that is reported by the UE by using an unlicensed frequency.

With reference to the eleventh aspect, in a second possible implementation manner, before the receiving, by the base station, measurement information reported by the UE, the method further includes:
sending, by the base station, first indication information to the UE, where the first indication information is used to enable the UE to report the measurement information of the at least one first signal; and
correspondingly, the receiving, by the base station, measurement information reported by the UE is specifically:
   receiving, by the base station, the measurement information that is reported by the UE according to the first indication information.

With reference to the eleventh aspect or the first possible implementation manner of the eleventh aspect, in a third possible implementation manner, the receiving, by the base station, measurement information reported by the UE includes:
receiving, by the base station, the measurement information reported by the UE, where the measurement information is sent by the UE when the UE determines that the measurement information of the at least one first signal is less than a preset threshold; or
receiving, by the base station, the measurement information reported by the UE, where the measurement information is sent by the UE when the UE determines that the measurement information of the first signal reaches measurement information of a preset period.

With reference to the eleventh aspect or the foregoing possible implementation manners of the eleventh aspect, in a fourth possible implementation manner, before the sending, by a base station, at least one first signal to user equipment UE by using an unlicensed frequency, the method further includes:
sending, by the base station, a first notification message to the UE in a connected state by using a licensed frequency, where the first notification message is used to enable the UE to obtain, when in a connected state, the measurement information of the at least one first signal in the unlicensed frequency.

With reference to the eleventh aspect or the first to third possible implementation manners of the eleventh aspect, in a fifth possible implementation manner, before the sending, by a base station, at least one first signal to user equipment UE by using an unlicensed frequency, the method further includes:
sending, by the base station, a second notification message to the UE in a connected state by using a licensed frequency, where the second notification message is used to enable the UE to obtain, when in an idle state, the measurement information of the at least one first signal in the unlicensed frequency.

With reference to the eleventh aspect or the first possible implementation manner of the eleventh aspect, in a sixth possible implementation manner, before the sending, by a base station, at least one first signal to user equipment UE by using an unlicensed frequency, the method further includes:
sending, by the base station, a third notification message to the UE by using a licensed frequency, where the third notification message is used to enable the UE to obtain measurement information of a second signal in the licensed frequency, and the second signal is a cell reference signal in the licensed frequency; and
the receiving, by the base station, measurement information reported by the UE includes:
   receiving, by the base station, the measurement information of the second signal and the measurement information of the first signal that are reported by the UE.

With reference to the eleventh aspect or the first possible implementation manner of the eleventh aspect, in a seventh possible implementation manner, the method further includes:
receiving, by the base station, a first message sent by the UE, where the first message is sent by the UE after the UE has not obtained the measurement information of the at least one first signal in the unlicensed frequency, and the first message includes information used to indicate that the UE has not obtained the measurement information of the first signal, and/or measurement information, which is already successfully obtained by the UE a time period before the UE sends the first message, of at least one first signal; or
receiving, by the base station, a second message sent by the UE, where the second message is sent by the UE after the UE fails to detect the at least one first signal in the unlicensed frequency, and the second message includes information used to indicate that the UE fails to detect the first signal, and/or measurement information, which is already successfully obtained by the UE a time period before the UE sends the first message, of at least one first signal.

With reference to the eleventh aspect or the foregoing possible implementation manners of the eleventh aspect, in an eighth possible implementation manner, the first signal is one or more of the following signals:
a primary synchronization signal PSS, a secondary synchronization signal SSS, a discovery signal, or a beacon signal.

With reference to the eleventh aspect or the foregoing possible implementation manners of the eleventh aspect, in a ninth possible implementation manner, the measurement information of the first signal is one or more of the following information:
signal received power RSRP or signal received quality RSRQ.

With reference to the eleventh aspect, in a tenth possible implementation manner, the method further includes:
sending, by the base station, second indication information to the UE, where the second indication information is used to enable the UE to obtain use information of the unlicensed frequency and report use information, obtained within a preset time, of the unlicensed frequency; and
receiving, by the base station, the use information reported by the UE, where the use information is use information, which is obtained by the UE within the preset time according to the second indication information, of the unlicensed frequency.

With reference to the eleventh aspect or the tenth possible implementation manner of the eleventh aspect, in an eleventh possible implementation manner, the receiving, by the base station, the use information reported by the UE includes:
receiving, by the base station, the use information that is reported by the UE by using a licensed frequency; or
receiving, by the base station, the use information that is reported by the UE by using an unlicensed frequency.

With reference to the eleventh aspect or the tenth or eleventh possible implementation manner of the eleventh aspect, in a twelfth possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

According to a twelfth aspect, an embodiment of the present invention provides a method for obtaining unlicensed frequency information, including:
sending, by a base station, third indication information to user equipment UE, and receiving, by the base station, use information reported by the UE, where the use information is use information, which is obtained by the UE within a preset time according to the third indication information, of an unlicensed frequency.

With reference to the twelfth aspect, in a first possible implementation manner, the receiving, by the base station, use information reported by the UE includes:
receiving, by the base station, the use information that is reported by the UE by using a licensed frequency; or
receiving, by the base station, the use information that is reported by the UE by using an unlicensed frequency.

With reference to the second aspect or the first possible implementation manner of the second aspect, in a second possible implementation manner, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

As can be known from the foregoing technical solutions, in the method for obtaining unlicensed frequency information and the device in the embodiments of the present invention, UE obtains measurement information of at least one first signal in an unlicensed frequency, and after successfully obtaining the measurement information of the at least one first signal, the UE reports the obtained measurement information, so that the base station can learn related information of the unlicensed frequency, and the UE can perform communication by properly using the unlicensed frequency.

### BRIEF DESCRIPTION OF DRAWINGS

FIG. 1 is a schematic flowchart of a method for obtaining unlicensed frequency information according to an embodiment of the present invention;
FIG. 2 to FIG. 11 are schematic flowcharts of methods for obtaining unlicensed frequency information according to other embodiments of the present invention;
FIG. 12 is a schematic structural diagram of user equipment according to an embodiment of the present invention;
FIG. 13 is a schematic structural diagram of a communications device according to an embodiment of the present invention;
FIG. 14 is a schematic structural diagram of user equipment according to another embodiment of the present invention; and
FIG. 15 is a schematic structural diagram of a communications device according to another embodiment of the present invention.

### DESCRIPTION OF EMBODIMENTS

Currently, a mobile operator needs more spectrum resources to satisfy requirements of user equipment. For example, the operator hopes that the 3^{rd} generation partnership project (3rd Generation Partnership Project, 3GPP for short) network (for example, LTE) can be deployed in an unlicensed spectrum, to perform cooperative communication with an existing operator LTE network.

In the embodiments of the present invention, an LTE system using an unlicensed spectrum is collectively referred to as LTE-U (LTE-Unlicensed). In the LTE-U, when using the unlicensed spectrum, a base station needs to share the spectrum resource with another technical device (for example, WiFi).

It should be noted that, an implementation manner of establishing a synchronization system in the LTE-U is: a synchronization signal or discovery signal of a UCELL is needed. In views of this, in the embodiments of the present invention, in the LTE-U, a base station sends a synchronization signal or discovery signal to UE by using an unlicensed frequency, so that the UE discovers the UCELL based on the synchronization signal or discovery signal, and establishes a particular synchronization relationship with the UCELL based on the signal. Certainly, the synchronization signal and the discovery signal may not exist in the LTE-U system simultaneously.

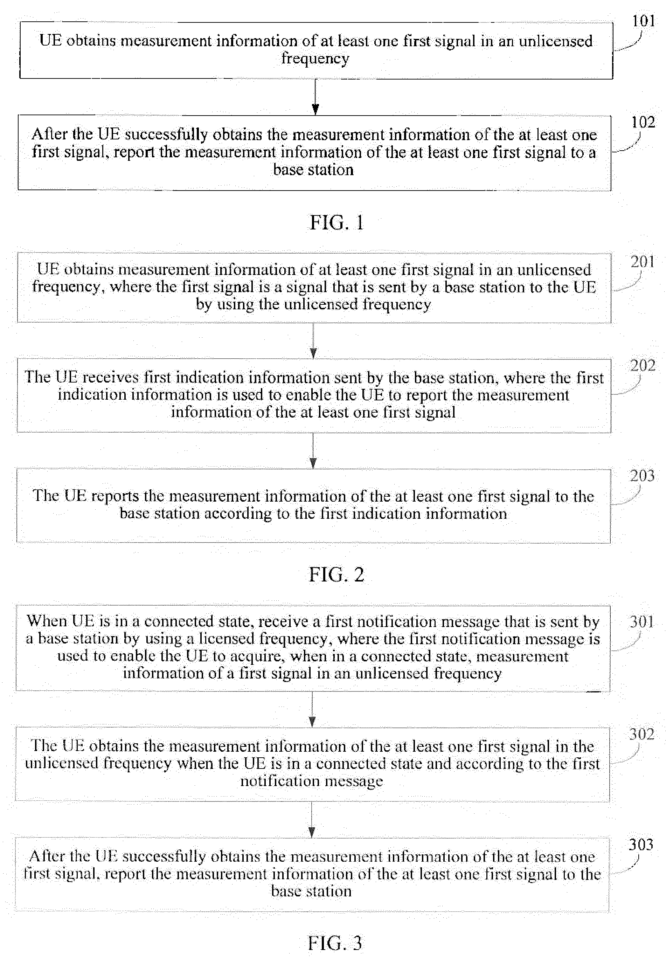

FIG. 1 is a schematic flowchart of a method for obtaining unlicensed frequency information according to an embodiment of the present invention. As shown in FIG. 1, the method for obtaining unlicensed frequency information in this embodiment is as follows:
101: UE obtains measurement information of at least one first signal in an unlicensed frequency.

In this embodiment, the first signal may be a signal that is sent by a base station to the UE by using the unlicensed frequency. In addition, the base station may send first signals to the UE by using the unlicensed frequency at different time points according to an existing protocol.

For example, the first signal may be one or more of the following signals:
a primary synchronization signal (Primary Synchronisation Signal, PSS for short), a secondary synchronization signal (Secondary Synchronisation Signal, SSS for short), a discovery signal, or a beacon (beacon) signal.

In this embodiment, the measurement information of the first signal may be signal received power (Reference Signal Receiving Power, RSRP for short) and/or signal received quality (Reference Signal Receiving Quality, RSRQ for short), or other information about wireless signal quality measurement. Certainly, the measurement information of the first signal in this embodiment may be information indicating that receiving of the first signal fails.

It should be noted that when the UE obtains the measurement information of the first signal in the unlicensed frequency, the UE may obtain, according to the existing protocol, a time when the base station sends the first signal to the UE by using the unlicensed frequency. That is, to use a UCELL corresponding to the unlicensed frequency, the base station needs to send the first signal to the UE in the unlicensed frequency, and further, the UE may obtain, in the unlicensed frequency, the measurement information of the first signal sent by the base station.

102: After the UE successfully obtains the measurement information of the at least one first signal, report the measurement information of the at least one first signal to a base station.

It may be understood that the UE may report the measurement information of the at least one first signal to the base station by using a licensed frequency, or the UE reports the measurement information of the at least one first signal to the base station by using an unlicensed frequency.

Certainly, the UE may report measurement information of one first signal to the base station immediately after successfully obtaining the measurement information of the first signal. Alternatively, the UE may report measurement information of all first signals within a period (for example, a day or a week) to the base station immediately after successfully obtaining the measurement information of the first signals within the period.

For example, step 102 may be specifically: when the measurement information of the at least one first signal is less than a preset threshold, reporting the measurement information of the at least one first signal to the base station.

That is, when obtaining that measurement information of a particular first signal is less than the preset threshold, the UE may report the measurement information less than the threshold to the base station. Alternatively, when obtaining that measurement information of a particular first signal is less than the preset threshold, the UE reports the measurement information less than the preset threshold and measurement information that is already successfully obtained and that is not less than the preset threshold to the base station.

In addition, step 102 may be specifically: when the measurement information of the first signal reaches measurement information of a preset period, reporting measurement information of all signals within the preset period to the base station. That is, after obtaining measurement information of all first signals within a period, the UE reports the measurement information (including measurement information less than the preset threshold or measurement information not less than the preset threshold) of all first signals to the base station.

The UE may report the measurement information of the at least one first signal by using a licensed frequency or an unlicensed frequency.

That is, the UE may report the measurement information of the at least one first signal based on a period or an event. Certainly, in a specific application process, the UE may report the measurement information based on indication information configured by the base station.

In the method for obtaining unlicensed frequency information in this embodiment, UE obtains measurement information of at least one first signal in an unlicensed frequency, and after successfully obtaining the measurement information of the at least one first signal, the UE reports the successfully obtained measurement information to a base station, so that the base station can learn related information of the unlicensed frequency, and the UE can perform communication by properly using the unlicensed frequency.

FIG. 2 is a schematic flowchart of a method for obtaining unlicensed frequency information according to an embodiment of the present invention. As shown in FIG. 2, the method for obtaining unlicensed frequency information in this embodiment is as follows:
201: UE obtains measurement information of at least one first signal in an unlicensed frequency, where the first signal is a signal that is sent by a base station to the UE by using the unlicensed frequency
202: The UE receives first indication information sent by the base station, where the first indication information is used to enable the UE to report the measurement information of the at least one first signal.
203: The UE reports the measurement information of the at least one first signal to the base station according to the first indication information.

Optionally, the UE reports the successfully obtained measurement information of the first signal to the base station by using a licensed frequency according to the first indication information, or the UE reports the successfully obtained measurement information of the first signal to the base station by using an unlicensed frequency according to the first indication information.

Certainly, in another optional scenario, the first indication information may clearly instruct the UE to report the successfully obtained measurement information of the first signal by using a licensed frequency or an unlicensed frequency. Alternatively, the first indication information may clearly instruct the UE to report measurement information, which is successfully obtained by the UE within a time period, of a first signal. This embodiment is merely exemplary description.

In the method for obtaining unlicensed frequency information in this embodiment, UE obtains measurement information of at least one first signal in an unlicensed frequency, and further, reports the successfully obtained measurement information of the first signal to a base station according to indication information sent by the base station, so that the base station can learn related information of the unlicensed frequency, and the UE can perform communication by properly using the unlicensed frequency.

FIG. 3 is a schematic flowchart of a method for obtaining unlicensed frequency information according to an embodiment of the present invention. As shown in FIG. 3, the method for obtaining unlicensed frequency information in this embodiment is as follows:
301: When UE is in a connected state, receive a first notification message that is sent by a base station by using a licensed frequency, where the first notification message is used to enable the UE to obtain, when in a connected state, measurement information of a first signal in an unlicensed frequency.

In this embodiment, the first signal is a signal that is sent by the base station to the UE by using the unlicensed frequency. In addition, the base station sends the first signal to the UE according to the current protocol.

302: The UE obtains the measurement information of the at least one first signal in the unlicensed frequency when the UE is in a connected state and according to the first notification message.

303: After the UE successfully obtains the measurement information of the at least one first signal, report the measurement information of the at least one first signal to the base station.

In this embodiment, a network side device (for example, the base station) may configure that the UE needs to use a UCELL, so that the UE discovers the UCELL based on the first signal.

Certainly, in step 303, the UE in a connected state may determine, according to configuration of the network side device or autonomously, whether to report measurement information of a first signal for the UCELL.

For example, the determining, by the UE autonomously, to report the measurement information of the first signal for the UCELL may include:
if the UE has not obtained the measurement information of the at least one first signal that is sent by the base station by using the unlicensed frequency, sending a first message to the base station, where the first message includes information used to indicate that the UE has not obtained the measurement information of the first signal, and/or measurement information, which is already successfully obtained by the UE a time period before the UE sends the first message, of at least one first signal;

In this embodiment, the reason why the UE has not obtained the measurement information of the first signal may be: the base station does not send the first signal, or the base station does not send the first signal successfully.

In the method for obtaining unlicensed frequency information in this embodiment, a base station instructs UE to obtain, when in a connected state, measurement information of an unlicensed frequency, so that the base station receives the measurement information, reported by the UE when in a connected state, of a first signal in the unlicensed frequency, thereby effectively using the unlicensed frequency.

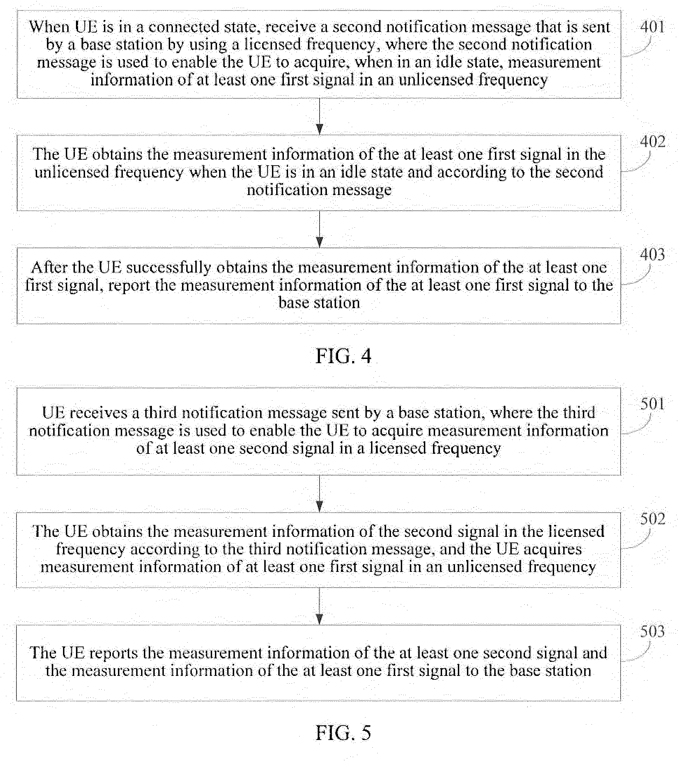

FIG. 4 is a schematic flowchart of a method for obtaining unlicensed frequency information according to an embodiment of the present invention. As shown in FIG. 4, the method for obtaining unlicensed frequency information in this embodiment is as follows:
401: When UE is in a connected state, receive a second notification message that is sent by a base station by using a licensed frequency, where the second notification message is used to enable the UE to obtain, when in an idle state, measurement information of at least one first signal in an unlicensed frequency.

In this embodiment, the first signal is a signal that is sent by the base station to the UE by using the unlicensed frequency. In addition, the base station sends the first signal to the UE according to the current protocol.

402: The UE obtains the measurement information of the at least one first signal in the unlicensed frequency when the UE is in an idle state and according to the second notification message.

403: After the UE successfully obtains the measurement information of the at least one first signal, report the measurement information of the at least one first signal to the base station.

In this embodiment, a network side device (for example, the base station) may configure that the UE needs to use a UCELL, so that the UE discovers the UCELL based on the first signal.

Certainly, in step 403, the UE in a connected state refers to that the UE is in a connected state in the licensed frequency, and the UE in an idle state also refers to that the UE is in an idle state in the licensed frequency. Certainly, the UE may determine, according to configuration of the network side device or autonomously, whether to report measurement information of a first signal for the UCELL.

For example, the determining, by the UE autonomously, to report the measurement information of the first signal for the UCELL may include:
if the UE fails to detect the at least one first signal that is sent by the base station by using the unlicensed frequency, sending a second message to the base station, where the second message includes information used to indicate that the UE fails to detect the first signal, and/or measurement information, which is already successfully obtained by the UE a time period before the UE sends the second message, of at least one first signal.

In this embodiment, that the UE fails to detect the first signal may be understood as: the base station already sends a first signal and the first signal detected by the UE is very week, for example, the detected first signal is less than or equal to a preset threshold, it may be understood that detection of the first signal fails. In addition, the UE may detect the first signal but fail in decoding the first signal, which may be understood as that the UE fails to detect the first signal.

Alternatively, if the network side device notifies the UE that a PSS/SSS is sent in a resource location of a corresponding unlicensed frequency, but the UE does not detect these signals, the UE determines that detection of the signal fails.

In the method for obtaining unlicensed frequency information in this embodiment, a base station instructs UE to obtain, when in an idle state, measurement information of an unlicensed frequency, so that the base station receives the measurement information, reported by the UE when in a connected state, of a first signal in the unlicensed frequency, thereby effectively using the unlicensed frequency.

FIG. 5 is a schematic flowchart of a method for obtaining unlicensed frequency information according to an embodiment of the present invention. As shown in FIG. 5, the method for obtaining unlicensed frequency information in this embodiment is as follows:
501: UE receives a third notification message sent by a base station, where the third notification message is used to enable the UE to obtain measurement information of at least one second signal in a licensed frequency.

In this embodiment, the second signal may be a cell reference signal in the licensed frequency. That is, in an existing protocol, in the licensed frequency, the base station sends the cell reference signal to the UE by using the licensed frequency according to the protocol.

In addition, the obtaining the measurement information of the second signal may be understood as: obtaining radio resource management (Radio Resource Management, RRM for short) information and/or minimization of drive tests (Minimization Drive Test, MDT for short) information of the second signal.

502: The UE obtains the measurement information of the second signal in the licensed frequency according to the third notification message, and the UE obtains measurement information of at least one first signal in an unlicensed frequency.

503: The UE reports the measurement information of the at least one second signal and the measurement information of the at least one first signal to the base station.

That is, q network side device configures that the UE obtains the radio resource management (Radio Resource Management, RRM for short) information or minimization of drive tests (Minimization Drive Test, MDT for short) information in the licensed frequency, so that the UE can autonomously adds measurement information of a UCELL to the RRM information or the MDT information and report the RRM information or the MDT information to the base station. Certainly, the measurement information of the first signal and the measurement information of the second signal in the information reported by the UE are identified by using identifiers, and it is identified which part of information corresponds to the UCELL.

In a specific application process, the UE may add location information of the UE to the reported measurement information. This embodiment is merely exemplary description, and does not limit content of information added to the measurement information.

In the method for obtaining unlicensed frequency information, a base station may learn measurement information in an unlicensed frequency while learning measurement information in a licensed frequency, which can reduce an information sending amount, and the UE can communicate with the base station by using an unlicensed frequency properly.

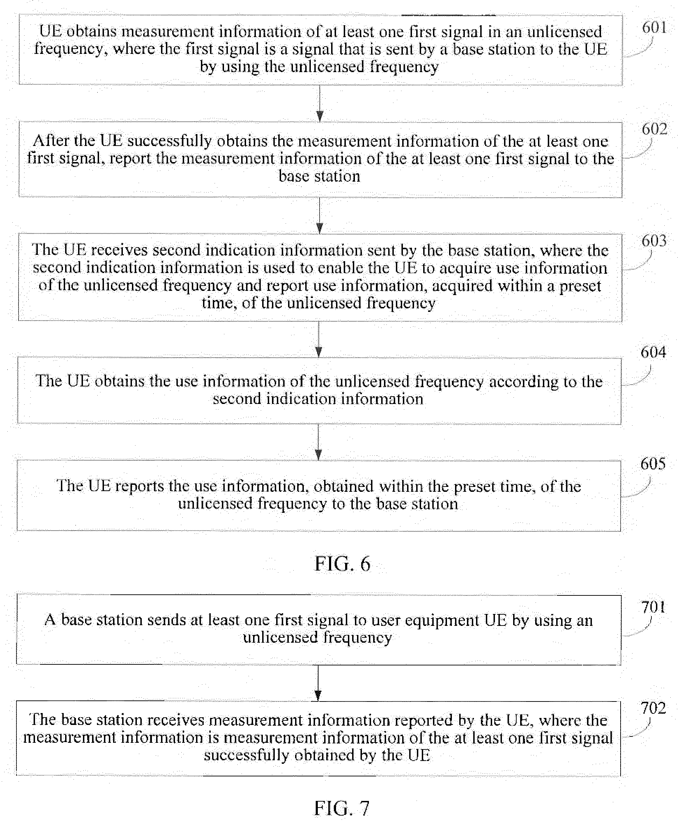

FIG. 6 is a schematic flowchart of a method for obtaining unlicensed frequency information according to an embodiment of the present invention. As shown in FIG. 6, the method for obtaining unlicensed frequency information in this embodiment is as follows:
601: UE obtains measurement information of at least one first signal in an unlicensed frequency, where the first signal is a signal that is sent by a base station to the UE by using the unlicensed frequency.
602: After the UE successfully obtains the measurement information of the at least one first signal, report the measurement information of the at least one first signal to the base station.
603: The UE receives second indication information sent by the base station, where the second indication information is used to enable the UE to obtain use information of the unlicensed frequency and report use information, obtained within a preset time, of the unlicensed frequency.
604: The UE obtains the use information of the unlicensed frequency according to the second indication information.

Optionally, the UE obtains the use information of the unlicensed frequency when the UE is in a connected state and according to the second indication information, or the UE obtains the use information of the unlicensed frequency when the UE is in an idle state and according to the second indication information.

Certainly, the base station may instruct, by using the second indication information, the UE to obtain the use information of the unlicensed frequency when the UE is in an idle state or a connected state.

In this embodiment, both the idle state and the connected state are a status of the UE in a licensed frequency.

605: The UE reports the use information, obtained within the preset time, of the unlicensed frequency to the base station.

For example, the UE may report the use information, obtained within the preset time, of the unlicensed frequency to the base station by using a licensed frequency, or the UE may report the use information, obtained within the preset time, of the unlicensed frequency to the base station by using an unlicensed frequency.

For example, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

It may be understood that, if the UE uses an unlicensed frequency, the UE needs to conform to some rules in the unlicensed frequency. For example, before sending the use information, the UE needs to listen to whether another UE uses the frequency, and if no UE is discovered, the UE in this embodiment of the present invention is allowed to send the use information. Therefore, a network side device may configure that the UE obtains the use information of the unlicensed frequency.

Certainly, in a specific application, one optional method for obtaining unlicensed frequency information may be as follows:
A01: The UE receives third indication information sent by the base station, where the third indication information is used to enable the UE to obtain use information of an unlicensed frequency and report use information, obtained within a preset time, of the unlicensed frequency.
A02: The UE obtains the use information of the unlicensed frequency according to the third indication information.

For example, the UE obtains the use information of the unlicensed frequency when the UE is in a connected state and according to the second indication information; or the UE obtains the use information of the unlicensed frequency when the UE is in an idle state and according to the second indication information.

A03: The UE reports the use information, obtained within the preset time, of the unlicensed frequency to the base station.

The UE may report the use information, obtained within the preset time, of the unlicensed frequency to the base station by using a licensed frequency; or the UE may report the use information, obtained within the preset time, of the unlicensed frequency to the base station by using an unlicensed frequency.

In this embodiment, both the idle state and the connected state are a status of the UE in the licensed frequency.

In this embodiment, the use information of the unlicensed frequency includes one or more of the following information:
a system (for example, a WIFI system or a radar system) using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

By means of the method for obtaining unlicensed frequency information, a base station can learn use information of an unlicensed frequency, to fully monitor use of the unlicensed frequency, so that the UE can perform communication by properly using the unlicensed frequency.

FIG. 7 is a schematic flowchart of a method for obtaining unlicensed frequency information according to an embodiment of the present invention. As shown in FIG. 7, the method for obtaining unlicensed frequency information in this embodiment is as follows:
701: A base station sends at least one first signal to user equipment UE by using an unlicensed frequency.

For example, the first signal may be one or more of a PSS, an SSS, a discovery signal, or a beacon signal.

702: The base station receives measurement information reported by the UE, where the measurement information is measurement information of the at least one first signal successfully obtained by the UE.

For example, the base station may receive the measurement information that is reported by the UE by using a licensed frequency, or the base station may receive the measurement information that is reported by the UE by using an unlicensed frequency.

The measurement information of the first signal may be RSRP and/or RSRQ.

Optionally, the base station receives the measurement information reported by the UE, where the measurement information is sent by the UE when the UE determines that the measurement information of the at least one first signal is less than a preset threshold; or
the base station receives the measurement information reported by the UE, where the measurement information is sent by the UE when the UE determines that the measurement information of the first signal reaches measurement information of a preset period.

In another optional application scenario, after step 702, the method for obtaining unlicensed frequency information may further include step 703 or 703' not shown in the figure.

703: The base station receives a first message sent by the UE, where the first message is sent by the UE after the UE has not obtained the measurement information of the at least one first signal in the unlicensed frequency, and the first message includes information used to indicate that the UE has not obtained the measurement information of the first signal, and/or measurement information, which is already successfully obtained by the UE a time period before the UE sends the first message, of at least one first signal.

703': The base station receives a second message sent by the UE, where the second message is sent by the UE after the UE fails to detect the at least one first signal in the unlicensed frequency, and the second message includes information used to indicate that the UE fails to detect the first signal, and/or measurement information, which is already successfully obtained by the UE a time period before the UE sends the first message, of at least one first signal.

In the method for obtaining unlicensed frequency information in this embodiment, a base station can learn related information of an unlicensed frequency, so that UE can perform communication by properly using the unlicensed frequency.

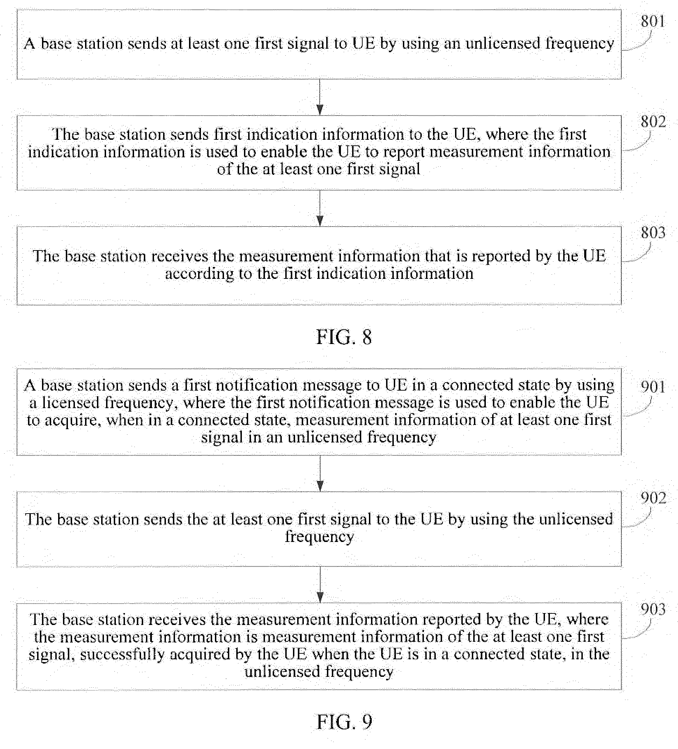

FIG. 8 is a schematic flowchart of a method for obtaining unlicensed frequency information according to an embodiment of the present invention. As shown in FIG. 8, the method for obtaining unlicensed frequency information in this embodiment is as follows:
801: A base station sends at least one first signal to UE by using an unlicensed frequency.
802: The base station sends first indication information to the UE, where the first indication information is used to enable the UE to report measurement information of the at least one first signal.
803: The base station receives the measurement information that is reported by the UE according to the first indication information.

In the method for obtaining unlicensed frequency information in this embodiment, a base station instructs UE to report measurement information of a first signal, to further learn related information of an unlicensed frequency, so that the UE can perform communication by properly using the unlicensed frequency.

FIG. 9 is a schematic flowchart of a method for obtaining unlicensed frequency information according to an embodiment of the present invention. As shown in FIG. 9, the method for obtaining unlicensed frequency information in this embodiment is as follows:
901: A base station sends a first notification message to UE in a connected state by using a licensed frequency, where the first notification message is used to enable the UE to obtain, when in a connected state, measurement information of at least one first signal in an unlicensed frequency.
902: The base station sends the at least one first signal to the UE by using the unlicensed frequency.
903: The base station receives the measurement information reported by the UE, where the measurement information is measurement information of the at least one first signal, successfully obtained by the UE when the UE is in a connected state, in the unlicensed frequency.

Optionally, 901 may be 901' not shown in the figure.

901': The base station sends a second notification message to UE in a connected state by using a licensed frequency, where the second notification message is used to enable the UE to obtain, when in an idle state, the measurement information of the at least one first signal in an unlicensed frequency.

Accordingly, step 903 may be 903' not shown in the figure.

903': The base station receives the measurement information reported by the UE, where the measurement information is measurement information of the at least one first signal, successfully obtained by the UE when the UE is in an idle state, in the unlicensed frequency.

In the method for obtaining unlicensed frequency information in this embodiment, a base station instructs UE to measure a first signal when the UE is in a connected state or an idle state, and further the base station receives measurement information, sent by the UE, of the first signal, to further learn related information of an unlicensed frequency, so that the UE can perform communication by properly using an unlicensed frequency.

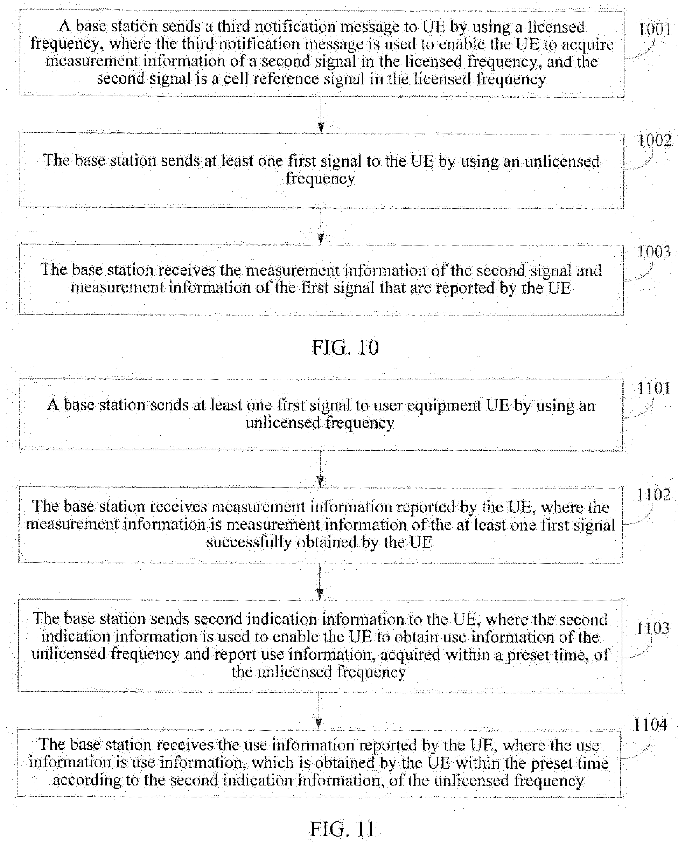

FIG. 10 is a schematic flowchart of a method for obtaining unlicensed frequency information according to an embodiment of the present invention. As shown in FIG. 10, the method for obtaining unlicensed frequency information in this embodiment is as follows:
1001: A base station sends a third notification message to UE by using a licensed frequency, where the third notification message is used to enable the UE to obtain measurement information of a second signal in the licensed frequency, and the second signal is a cell reference signal in the licensed frequency.
1002: The base station sends at least one first signal to the UE by using an unlicensed frequency.
1003: The base station receives the measurement information of the second signal and measurement information of the first signal that are reported by the UE.

The measurement information of the second signal may be RRM information and/or MDT information, and the measurement information of the first signal may be RSRP and/or RSRQ.

For example, the UE may obtain the measurement information of the first signal when the UE in an idle state, or the UE may obtain the measurement information of the first signal when the UE is in a connected state, which is not limited in this embodiment.

By means of the method for obtaining unlicensed frequency information in this embodiment, a base station can learn information about a licensed frequency and meanwhile, know related information of an unlicensed frequency.

FIG. 11 is a schematic flowchart of a method for obtaining unlicensed frequency information according to an embodiment of the present invention. As shown in FIG. 11, the method for obtaining unlicensed frequency information in this embodiment is as follows:
1101: A base station sends at least one first signal to user equipment UE by using an unlicensed frequency.

For example, the first signal may be one or more of a PSS, an SSS, a discovery signal, or a beacon signal.

1102: The base station receives measurement information reported by the UE, where the measurement information is measurement information of the at least one first signal successfully obtained by the UE.

1103: The base station sends second indication information to the UE, where the second indication information is used to enable the UE to obtain use information of the unlicensed frequency and report use information, obtained within a preset time, of the unlicensed frequency.

1104: The base station receives the use information reported by the UE, where the use information is use information, which is obtained by the UE within the preset time according to the second indication information, of the unlicensed frequency.

Optionally, the base station may receive the use information that is reported by the UE by using a licensed frequency, or the base station receives the use information that is reported by the UE by using an unlicensed frequency.

For example, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

In an optional implementation scenario, the method for obtaining unlicensed frequency information may include the following steps not shown in the figure.

B01: The base station sends third indication information to the user equipment UE, where the third indication information is used to enable the UE to obtain use information of an unlicensed frequency and report use information, obtained within a preset time, of the unlicensed frequency.

B02: The base station receives the use information reported by the UE, where the use information is use information, which is obtained by the UE within the preset time according to the third indication information, of the unlicensed frequency.

For example, the base station may receive the use information that is reported by the UE by using a licensed frequency, or the base station may receive the use information that is reported by the UE by using an unlicensed frequency.

For example, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

In the method for obtaining unlicensed frequency information in this embodiment, a base station learns use information of an unlicensed frequency, to fully monitor use of the unlicensed frequency.

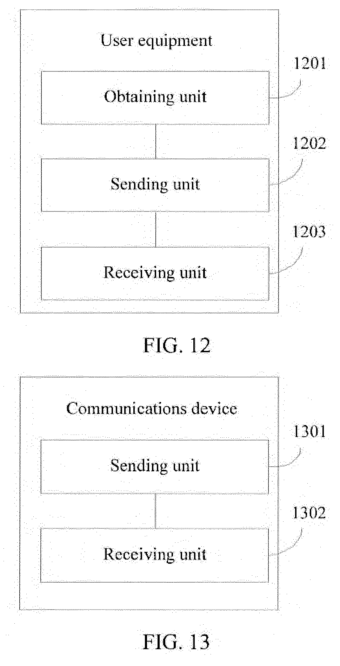

FIG. 12 is a schematic structural diagram of user equipment according to an embodiment of the present invention. As shown in FIG. 12, the user equipment in this embodiment may include an obtaining unit 1201 and a sending unit 1202, where
the obtaining unit 1201 is configured to obtain measurement information of at least one first signal in an unlicensed frequency; and
the sending unit 1202 is configured to: after the obtaining unit successfully obtains the measurement information of the at least one first signal, report the measurement information of the at least one first signal to a base station, where
the first signal is a signal sent by the base station to user equipment UE by using the unlicensed frequency, and the first signal may be one or more of a PSS, an SSS, a discovery signal, or a beacon signal.

The measurement information of the first signal may be RSRP and/or RSRQ.

For example, the sending unit 1202 is specifically configured to: after the obtaining unit 1201 successfully obtains the measurement information of the at least one first signal, report the measurement information of the at least one first signal to the base station by using a licensed frequency; or
the sending unit 1202 is specifically configured to: after the obtaining unit 1201 successfully obtains the measurement information of the at least one first signal, report the measurement information of the at least one first signal to the base station by using an unlicensed frequency.

The user equipment in the foregoing embodiment may implement the process of the embodiment shown in FIG. 1 of the present invention.

Optionally, the user equipment may further include a receiving unit 1203, where
the receiving unit 1203 is configured to: before the obtaining unit 1201 successfully obtains the measurement information of the at least one first signal, receive first indication information sent by the base station, where the first indication information is used to enable the UE to report the measurement information of the first signal; and
correspondingly, the sending unit 1202 is specifically configured to report the measurement information of the at least one first signal to the base station according to the first indication information received by the receiving unit 1203.

The user equipment in the foregoing embodiment may implement the process of the embodiment shown in FIG. 2 of the present invention.

In an optional application scenario, the receiving unit 1203 is configured to: before the obtaining unit 1201 successfully obtains the measurement information of the at least one first signal and when the UE is in a connected state, receive a first notification message that is sent by the base station by using a licensed frequency, where the first notification message is used to enable the UE to obtain, when in a connected state, the measurement information of the at least one first signal in the unlicensed frequency; and
correspondingly, the obtaining unit 1201 is specifically configured to obtain the measurement information of the at least one first signal in the unlicensed frequency when the UE is in a connected state and according to the first notification message received by the receiving unit 1203.

The user equipment in the foregoing embodiment may implement the process of the embodiment shown in FIG. 3 of the present invention.

In a second optional application scenario, the receiving unit 1203 is configured to: before the obtaining unit 1201 successfully obtains the measurement information of the at least one first signal and when the UE is in a connected state, receive a second notification message that is sent by the base station by using a licensed frequency, where the second notification message is used to enable the UE to obtain, when in an idle state, the measurement information of the at least one first signal in the unlicensed frequency; and
correspondingly, the obtaining unit 1201 is specifically configured to obtain the measurement information of the at least one first signal in the unlicensed frequency when the UE is in an idle state and according to the second notification message received by the receiving unit 1203.

The user equipment in the foregoing embodiment may implement the process of the embodiment shown in FIG. 4 of the present invention.

In a third optional application scenario, the receiving unit 1203 is further configured to: before the obtaining unit 1201 successfully obtains the measurement information of the at least one first signal, receive a third notification message sent by the base station, where the third notification message is used to enable the UE to obtain measurement information of at least one second signal in a licensed frequency, and the second signal is a cell reference signal in the licensed frequency;
correspondingly, the obtaining unit 1201 is further configured to obtain the measurement information of the second signal in the licensed frequency according to the third notification message received by the receiving unit 1203; and
the sending unit 1202 is further configured to: after the obtaining unit 1201 successfully obtains the measurement information of the at least one second signal, report the measurement information of the at least one second signal and the measurement information of the at least one first signal to the base station.

The user equipment in the foregoing embodiment may implement the process of the embodiment shown in FIG. 5 of the present invention.

In a fourth optional application scenario, the sending unit 1202 may be specifically configured to:
after the obtaining unit 1201 successfully obtains the measurement information of the at least one first signal and when the measurement information of the at least one first signal is less than a preset threshold, report the measurement information of the at least one first signal to the base station; or
after the obtaining unit 1201 successfully obtains the measurement information of the at least one first signal and when the measurement information of the first signal reaches measurement information of a preset period, report measurement information of all first signals within the preset period to the base station.

The user equipment in the foregoing embodiment may implement the process of the embodiment shown in FIG. 1 of the present invention.

In a fifth optional application scenario, the sending unit 1202 is further configured to:
when the obtaining unit 1201 has not obtained the measurement information of the at least one first signal that is sent by the base station by using the unlicensed frequency, send a first message to the base station, where the first message includes information used to indicate that the UE has not obtained the measurement information of the first signal, and/or measurement information, which is already successfully obtained by the UE a time period before the UE sends the first message, of at least one first signal; or
when the obtaining unit 1201 fails to detect the at least one first signal that is sent by the base station by using the unlicensed frequency, send a second message to the base station, where the second message includes information used to indicate that the UE fails to detect the first signal, and/or measurement information, which is already successfully obtained by the UE a time period before the UE sends the second message, of at least one first signal.

The user equipment in the foregoing embodiment may implement the process of the embodiment shown in FIG. 3 of the present invention.

In a sixth optional application scenario, the receiving unit 1203 is further configured to: after the sending unit 1202 reports the measurement information of the at least one first signal, receive second indication information sent by the base station, where the second indication information is used to enable the UE to obtain use information of the unlicensed frequency and report use information, obtained within a preset time, of the unlicensed frequency;
correspondingly, the obtaining unit 1201 is configured to obtain the use information of the unlicensed frequency according to the second indication information received by the receiving unit 1203; and
the sending unit 1202 is configured to: after the obtaining unit 1201 obtains the use information of the unlicensed frequency, report the use information, obtained within the preset time, of the unlicensed frequency to the base station.

Optionally, the obtaining unit 1201 is specifically configured to obtain the use information of the unlicensed frequency when the UE is in a connected state and according to the second indication information received by the receiving unit 1203; or the obtaining unit 1201 is specifically configured to obtain the use information of the unlicensed frequency when the UE is in an idle state and according to the second indication information received by the receiving unit 1203.

Optionally, the sending unit 1202 is specifically configured to: after the obtaining unit 1201 obtains the use information of the unlicensed frequency, report the use information, obtained within the preset time, of the unlicensed frequency to the base station by using a licensed frequency; or the sending unit 1202 is specifically configured to: after the obtaining unit 1201 obtains the use information of the unlicensed frequency, report the use information, obtained within the preset time, of the unlicensed frequency to the base station by using an unlicensed frequency.

For example, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

The user equipment in the foregoing embodiment may implement the process of the embodiment shown in FIG. 6 of the present invention.

In a seventh optional application scenario, the receiving unit 1203 is configured to receive third indication information sent by the base station, where the third indication information is used to enable the user equipment UE to obtain use information of the unlicensed frequency and report use information, obtained within a preset time, of the unlicensed frequency;
the obtaining unit 1201 is configured to obtain the use information of the unlicensed frequency according to the third indication information received by the receiving unit 1203; and
the sending unit 1202 is configured to: after the obtaining unit 1201 obtains the use information of the unlicensed frequency, report the use information, obtained within the preset time, of the unlicensed frequency to the base station.

Optionally, the obtaining unit 1201 is specifically configured to obtain the use information of the unlicensed frequency when the UE is in a connected state and according to the third indication information received by the receiving unit 1203; or the obtaining unit 1201 is specifically configured to obtain the use information of the unlicensed frequency when the UE is in an idle state and according to the third indication information received by the receiving unit 1203.

Correspondingly, the sending unit 1202 is specifically configured to: after the obtaining unit 1201 obtains the use information of the unlicensed frequency, report the use information, obtained within the preset time, of the unlicensed frequency to the base station by using a licensed frequency; or the sending unit 1202 is specifically configured to: after the obtaining unit 1201 obtains the use information of the unlicensed frequency, report the use information, obtained within the preset time, of the unlicensed frequency to the base station by using an unlicensed frequency.

The user equipment in the foregoing embodiment may implement the process in step A01 and step A02 in the foregoing embodiment of the present invention.

FIG. 13 is a schematic structural diagram of a communications device according to an embodiment of the present invention. As shown in FIG. 13, the communications device in this embodiment may include a sending unit 1301 and a receiving unit 1302, where
the sending unit 1301 is configured to send at least one first signal to UE by using an unlicensed frequency; and
the receiving unit 1302 is configured to: after the sending unit 1301 sends the at least one first signal, receive measurement information reported by the UE, where the measurement information is measurement information of the at least one first signal successfully obtained by the UE.

For example, the receiving unit 1302 is specifically configured to: after the sending unit 1301 sends the at least one first signal, receive the measurement information that is reported by the UE by using a licensed frequency; or the receiving unit 1302 is specifically configured to: after the sending unit 1301 sends the at least one first signal, receive the measurement information that is reported by the UE by using an unlicensed frequency.

The first signal may be one or more of a PSS, an SSS, a discovery signal, or a beacon signal. The measurement information of the first signal may be RSRP and/or RSRQ.

The communications device in the foregoing embodiment may implement the process of the embodiment shown in FIG. 7 of the present invention.

In an optional application scenario, the sending unit 1301 is further configured to: before the receiving unit 1302 receives the measurement information reported by the UE, send first indication information to the UE, where the first indication information is used to enable the UE to report the measurement information of the at least one first signal; and
the receiving unit 1302 is specifically configured to: after the sending unit 1301 sends the first indication information, receive the measurement information that is reported by the UE according to the first indication information.

Optionally, the receiving unit 1302 is specifically configured to: after the sending unit 1301 sends the at least one first signal, receive the measurement information reported by the UE, where the measurement information is sent by the UE when the UE determines that the measurement information of the at least one first signal is less than a preset threshold; or
the receiving unit 1302 is specifically configured to: after the sending unit 1301 sends the at least one first signal, receive the measurement information reported by the UE, where the measurement information is sent by the UE when the UE determines that the measurement information of the first signal reaches measurement information of a preset period.

The communications device in the foregoing embodiment may implement the process of the embodiment shown in FIG. 8 of the present invention.

In a second optional application scenario, the sending unit 1301 is further configured to: before sending the at least one first signal, send a first notification message to the UE in a connected state by using a licensed frequency, where the first notification message is used to enable the UE to obtain, when in a connected state, the measurement information of the at least one first signal in the unlicensed frequency.

The communications device in the foregoing embodiment may implement the process of the embodiment shown in FIG. 9 of the present invention.

In a third optional application scenario, the sending unit 1301 is further configured to: before sending the at least one first signal, send a second notification message to the UE in a connected state by using a licensed frequency, where the second notification message is used to enable the UE to obtain, when in an idle state, the measurement information of the at least one first signal in the unlicensed frequency.

The communications device in the foregoing embodiment may implement the process of the embodiment shown in FIG. 9 of the present invention.

In a fourth optional application scenario, the sending unit 1301 is further configured to: before sending the at least one first signal, send a third notification message to the UE by using a licensed frequency, where the third notification message is used to enable the UE to obtain measurement information of a second signal in the licensed frequency, and the second signal is a cell reference signal in the licensed frequency; and
optionally, the receiving unit 1302 is specifically configured to: after the sending unit 1301 sends the third notification message, receive the measurement information of the second signal and the measurement information of the first signal that are reported by the UE.

The communications device in the foregoing embodiment may implement the process of the embodiment shown in FIG. 10 of the present invention.

In a fifth optional application scenario, the receiving unit 1302 is further configured to: after the sending unit 1301 sends the at least one first signal, receive a first message sent by the UE, where the first message is sent by the UE after the UE has not obtained the measurement information of the at least one first signal in the unlicensed frequency, and the first message includes information used to indicate that the UE has not obtained the measurement information of the first signal, and/or measurement information, which is already successfully obtained by the UE a time period before the UE sends the first message, of at least one first signal; or
the receiving unit 1302 is further configured to: after the sending unit 1301 sends the at least one first signal, receive a second message sent by the UE, where the second message is sent by the UE after the UE fails to detect the at least one first signal in the unlicensed frequency, and the second message includes information used to indicate that the UE fails to detect the first signal, and/or measurement information, which is already successfully obtained by the UE a time period before the UE sends the first message, of at least one first signal.

The communications device in the foregoing embodiment may implement the process of the embodiment shown in FIG. 7 of the present invention.

In a sixth optional application scenario, the sending unit 1301 is further configured to:
after the receiving unit 1302 receives the measurement information of the at least one first signal, send second indication information to the UE, where the second indication information is used to enable the UE to obtain use information of the unlicensed frequency and report use information, obtained within a preset time, of the unlicensed frequency; and
the receiving unit 1302 is further configured to: after the sending unit 1301 sends the second indication information, receive the use information reported by the UE, where the use information is use information, which is obtained by the UE within the preset time according to the second indication information, of the unlicensed frequency.

The receiving unit 1302 is further configured to: after the sending unit 1301 sends the second indication information, receive the use information that is reported by the UE by using a licensed frequency; or the receiving unit 1302 is further configured to: after the sending unit 1301 sends the second indication information, receive the use information that is reported by the UE by using an unlicensed frequency.

For example, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

The communications device in the foregoing embodiment may implement the process of the embodiment shown in FIG. 11 of the present invention.

In a seventh optional application scenario, the sending unit 1301 is configured to send third indication information to the UE; and the receiving unit 1302 is configured to: after the sending unit 1302 sends the third indication information, receive the use information reported by the UE, where the use information is use information, which is obtained by the UE within the preset time according to the third indication information, of the unlicensed frequency.

Optionally, the receiving unit 1302 is specifically configured to: after the sending unit 1302 sends the third indication information, receive the use information that is reported by the UE by using a licensed frequency; or
the receiving unit 1302 is specifically configured to: after the sending unit 1302 sends the third indication information, receive the use information that is reported by the UE by using an unlicensed frequency.

The communications device in the foregoing embodiment may implement the process described in step B01 and step B02 of the present invention.

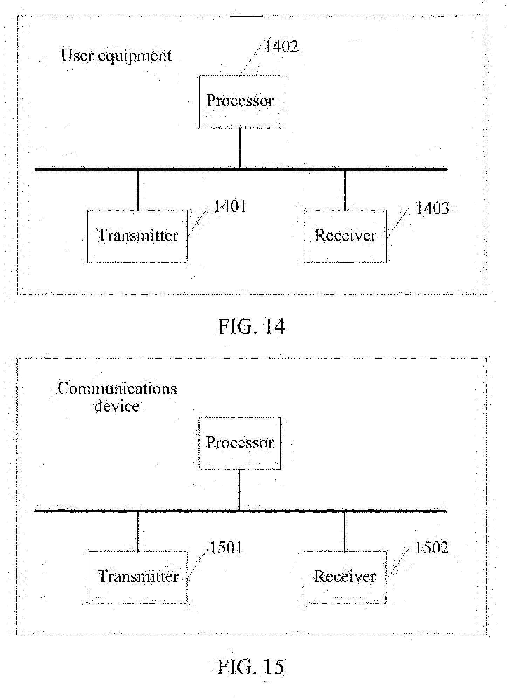

FIG. 14 is a schematic structural diagram of user equipment according to an embodiment of the present invention. As shown in FIG. 14, the user equipment in this embodiment may include a transmitter 1401 and a processor 1402, where
the processor 1402 is configured to obtain measurement information of at least one first signal in an unlicensed frequency; and the transmitter 1401 is configured to: after the processor 1402 successfully obtains the measurement information of the at least one first signal, report the measurement information of the at least one first signal to a base station, where
the first signal is a signal sent by the base station to the user equipment UE by using the unlicensed frequency, the first signal may be one or more of a PSS, an SSS, a discovery signal, or a beacon signal, and the measurement information of the first signal may be RSRP and/or RSRQ.

Optionally, the transmitter 1401 is specifically configured to: after the processor 1402 successfully obtains the measurement information of the at least one first signal, report the measurement information of the at least one first signal to the base station by using a licensed frequency; or
the transmitter 1401 is specifically configured to: after the processor 1402 successfully obtains the measurement information of the at least one first signal, report the measurement information of the at least one first signal to the base station by using an unlicensed frequency.

The user equipment in the foregoing embodiment may implement the process of the embodiment shown in FIG. 1 of the present invention.

In an optional application scenario, the user equipment further includes a receiver 1403, where
the receiver 1403 is configured to: before the processor 1402 successfully obtains the measurement information of the at least one first signal, receive first indication information sent by the base station, where the first indication information is used to enable the UE to report the measurement information of the first signal; and
the transmitter 1401 is specifically configured to report the measurement information of the at least one first signal to the base station according to the first indication information received by the receiver 1403.

The user equipment in the foregoing embodiment may implement the process of the embodiment shown in FIG. 2 of the present invention.

In a second optional application scenario, the receiver 1403 is configured to: before the processor 1402 successfully obtains the measurement information of the at least one first signal and when the UE is in a connected state, receive a first notification message that is sent by the base station by using a licensed frequency, where the first notification message is used to enable the UE to obtain, when in a connected state, the measurement information of the at least one first signal in the unlicensed frequency; and
optionally, the processor 1402 is specifically configured to obtain the measurement information of the at least one first signal in the unlicensed frequency when the UE is in a connected state and according to the first notification message received by the receiver 1403.

The user equipment in the foregoing embodiment may implement the process of the embodiment shown in FIG. 3 of the present invention.

In a third optional application scenario, the receiver 1403 is configured to: before the processor 1402 successfully obtains the measurement information of the at least one first signal and when the UE is in a connected state, receive a second notification message that is sent by the base station by using a licensed frequency, where the second notification message is used to enable the UE to obtain, when in an idle state, the measurement information of the at least one first signal in the unlicensed frequency; and
the processor 1402 is specifically configured to obtain the measurement information of the at least one first signal in the unlicensed frequency when the UE is in an idle state and according to the second notification message received by the receiver.

The user equipment in the foregoing embodiment may implement the process of the embodiment shown in FIG. 4 of the present invention.

In a fourth optional application scenario, the receiver 1403 is further configured to: before the processor 1402 successfully obtains the measurement information of the at least one first signal, receive a third notification message sent by the base station, where the third notification message is used to enable the UE to obtain measurement information of at least one second signal in a licensed frequency, and the second signal is a cell reference signal in the licensed frequency;
the processor 1402 is further configured to obtain the measurement information of the second signal in the licensed frequency according to the third notification message received by the receiver 1403; and
the transmitter 1401 is further configured to: after the processor 1402 successfully obtains the measurement information of the at least one second signal, report the measurement information of the at least one second signal and the measurement information of the at least one first signal to the base station.

The user equipment in the foregoing embodiment may implement the process of the embodiment shown in FIG. 5 of the present invention.

In a fifth optional application scenario, the transmitter 1401 is specifically configured to: after the processor 1402 successfully obtains the measurement information of the at least one first signal and when the measurement information of the at least one first signal is less than a preset threshold, report the measurement information of the at least one first signal to the base station; or the transmitter 1401 is specifically configured to: after the processor 1402 successfully obtains the measurement information of the at least one first signal and when the measurement information of the first signal reaches measurement information of a preset period, report measurement information of all first signals within the preset period to the base station.

The user equipment in the foregoing embodiment may implement the process of the embodiment shown in FIG. 1 of the present invention.

In a sixth optional application scenario, the transmitter 1401 is further configured to: when the processor 1402 has not obtained the measurement information of the at least one first signal that is sent by the base station by using the unlicensed frequency, send a first message to the base station, where the first message includes information used to indicate that the UE has not obtained the measurement information of the first signal, and/or measurement information, which is already successfully obtained by the UE a time period before the UE sends the first message, of at least one first signal; or
the transmitter 1401 is further configured to: when the processor 1402 fails to detect the at least one first signal that is sent by the base station by using the unlicensed frequency, send a second message to the base station, where the second message includes information used to indicate that the UE fails to detect the first signal, and/or measurement information, which is already successfully obtained by the UE a time period before the UE sends the second message, of at least one first signal.

The user equipment in the foregoing embodiment may implement the process of the embodiment shown in FIG. 3 of the present invention.

In a seventh optional application scenario, the receiver 1403 is configured to: after the transmitter 1401 reports the measurement information of the at least one first signal, receive second indication information sent by the base station, where the second indication information is used to enable the UE to obtain use information of the unlicensed frequency and report use information, obtained within a preset time, of the unlicensed frequency;
the processor 1402 is configured to obtain the use information of the unlicensed frequency according to the second indication information received by the receiver 1403; and
the transmitter 1401 is configured to: after the processor 1402 obtains the use information of the unlicensed frequency, report the use information, obtained within the preset time, of the unlicensed frequency to the base station.

Optionally, the processor 1402 is specifically configured to obtain the use information of the unlicensed frequency when the UE is in a connected state and according to the second indication information received by the receiver 1403; or
the processor 1402 is specifically configured to obtain the use information of the unlicensed frequency when the UE is in an idle state and according to the second indication information received by the receiver 1403.

Optionally, the transmitter 1401 is specifically configured to: after the processor 1402 obtains the use information of the unlicensed frequency, report the use information, obtained within the preset time, of the unlicensed frequency to the base station by using a licensed frequency; or
the transmitter 1401 is specifically configured to: after the processor 1402 obtains the use information of the unlicensed frequency, report the use information, obtained within the preset time, of the unlicensed frequency to the base station by using an unlicensed frequency.

For example, the use information of the unlicensed frequency may include one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

The user equipment in the foregoing embodiment may implement the process of the embodiment shown in FIG. 6 of the present invention.

In an eighth optional application scenario, the receiver 1403 is configured to receive third indication information sent by the base station, where the third indication information is used to enable the user equipment UE to obtain use information of the unlicensed frequency and report use information, obtained within a preset time, of the unlicensed frequency;
the processor 1402 is configured to obtain the use information of the unlicensed frequency according to the third indication information received by the receiver 1403; and
the transmitter 1401 is configured to: after the processor 1402 obtains the use information of the unlicensed frequency, report the use information, obtained within the preset time, of the unlicensed frequency to the base station.

Optionally, the processor 1402 is specifically configured to obtain the use information of the unlicensed frequency when the UE is in a connected state and according to the third indication information received by the receiver 1403; or
the processor 1402 is specifically configured to obtain the use information of the unlicensed frequency when the UE is in an idle state and according to the third indication information received by the receiver 1403.

Optionally, the transmitter 1401 is specifically configured to: after the processor 1402 obtains the use information of the unlicensed frequency, report the use information, obtained within the preset time, of the unlicensed frequency to the base station by using a licensed frequency; or the transmitter 1401 is specifically configured to: after the processor 1402 obtains the use information of the unlicensed frequency, report the use information, obtained within the preset time, of the unlicensed frequency to the base station by using an unlicensed frequency.

The user equipment in the foregoing embodiment may implement the process in step A01 and step A02 in the foregoing embodiment of the present invention.

FIG. 15 is a schematic structural diagram of a communications device according to an embodiment of the present invention. As shown in FIG. 15, the communications device in this embodiment may include a transmitter 1501 and a receiver 1502, where
the transmitter 1501 is configured to send at least one first signal to user equipment UE by using an unlicensed frequency; and the receiver 1502 is configured to: after the transmitter 1501 sends the at least one first signal, receive measurement information reported by the UE, where the measurement information is measurement information of the at least one first signal successfully obtained by the UE.

For example, the first signal may be one or more of a PSS, an SSS, a discovery signal, or a beacon signal. The measurement information of the first signal may be RSRP and/or RSRQ.

Optionally, the receiver 1502 is specifically configured to: after the transmitter 1501 sends the at least one first signal, receive the measurement information that is reported by the UE by using a licensed frequency; or
the receiver 1502 is specifically configured to: after the transmitter 1501 sends the at least one first signal, receive the measurement information that is reported by the UE by using an unlicensed frequency.

The communications device in the foregoing embodiment may implement the process of the embodiment shown in FIG. 7 of the present invention.

In an optional application scenario, the transmitter 1501 is further configured to: before the receiver 1502 receives the measurement information reported by the UE, send first indication information to the UE, where the first indication information is used to enable the UE to report the measurement information of the at least one first signal; and
the receiver 1502 is specifically configured to: after the transmitter 1501 sends the first indication information, receive the measurement information that is reported by the UE according to the first indication information.

Optionally, the receiver 1502 is specifically configured to: after the transmitter 1501 sends the at least one first signal, receive the measurement information reported by the UE, where the measurement information is sent by the UE when the UE determines that the measurement information of the at least one first signal is less than a preset threshold; or
the receiver 1502 is specifically configured to: after the transmitter 1501 sends the at least one first signal, receive the measurement information reported by the UE, where the measurement information is sent by the UE when the UE determines that the measurement information of the first signal reaches measurement information of a preset period.

The communications device in the foregoing embodiment may implement the process of the embodiment shown in FIG. 8 of the present invention.

In a second optional application scenario, the transmitter 1501 is further configured to: before sending the at least one first signal, send a first notification message to the UE in a connected state by using a licensed frequency, where the first notification message is used to enable the UE to obtain, when in a connected state, the measurement information of the at least one first signal in the unlicensed frequency.

The communications device in the foregoing embodiment may implement the process of the embodiment shown in FIG. 9 of the present invention.

In a third optional application scenario, the transmitter 1501 is further configured to: before sending the at least one first signal, send a second notification message to the UE in a connected state by using a licensed frequency, where the second notification message is used to enable the UE to obtain, when in an idle state, the measurement information of the at least one first signal in the unlicensed frequency.

The communications device in the foregoing embodiment may implement the process of the embodiment shown in FIG. 9 of the present invention.

In a fourth optional application scenario, the transmitter 1501 is further configured to: before sending the at least one first signal, send a third notification message to the UE by using a licensed frequency, where the third notification message is used to enable the UE to obtain measurement information of a second signal in the licensed frequency, and the second signal is a cell reference signal in the licensed frequency; and
the receiver 1502 is specifically configured to: after the transmitter 1501 sends the third notification message, receive the measurement information of the second signal and the measurement information of the first signal that are reported by the UE.

The communications device in the foregoing embodiment may implement the process of the embodiment shown in FIG. 10 of the present invention.

In a fifth optional application scenario, the receiver 1502 is further configured to: after the transmitter 1501 sends the at least one first signal, receive a first message sent by the UE, where the first message is sent by the UE after the UE has not obtained the measurement information of the at least one first signal in the unlicensed frequency, and the first message includes information used to indicate that the UE has not obtained the measurement information of the first signal, and/or measurement information, which is already successfully obtained by the UE a time period before the UE sends the first message, of at least one first signal; or
the receiver 1502 is further configured to: after the transmitter 1501 sends the at least one first signal, receive a second message sent by the UE, where the second message is sent by the UE after the UE fails to detect the at least one first signal in the unlicensed frequency, and the second message includes information used to indicate that the UE fails to detect the first signal, and/or measurement information, which is already successfully obtained by the UE a time period before the UE sends the first message, of at least one first signal.

The communications device in the foregoing embodiment may implement the process of the embodiment shown in FIG. 7 of the present invention.

In a sixth optional application scenario, the transmitter 1501 is further configured to: after the receiver 1502 receives the measurement information of the at least one first signal, send second indication information to the UE, where the second indication information is used to enable the UE to obtain use information of the unlicensed frequency and report use information, obtained within a preset time, of the unlicensed frequency; and
the receiver 1502 is further configured to: after the transmitter 1501 sends the second indication information, receive the use information reported by the UE, where the use information is use information, which is obtained by the UE within the preset time according to the second indication information, of the unlicensed frequency.

Optionally, the receiver 1502 is further configured to: after the transmitter 1501 sends the second indication information, receive the use information that is reported by the UE by using a licensed frequency; or the receiver 1502 is further configured to: after the transmitter 1501 sends the second indication information, receive the use information that is reported by the UE by using an unlicensed frequency.

For example, the use information of the unlicensed frequency includes one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

The communications device in the foregoing embodiment may implement the process of the embodiment shown in FIG. 11 of the present invention.

In a seventh optional application scenario, the transmitter 1501 is configured to send third indication information to the UE; and
the receiver 1502 is configured to: after the transmitter 1501 sends the third indication information, receive the use information reported by the UE, where the use information is use information, which is obtained by the UE within a preset time according to the third indication information, of the unlicensed frequency.

For example, the receiver 1502 is specifically configured to: after the transmitter 1501 sends the third indication information, receive the use information that is reported by the UE by using a licensed frequency; or
the receiver 1502 is specifically configured to: after the transmitter 1501 sends the third indication information, receive the use information that is reported by the UE by using an unlicensed frequency.

The communications device in the foregoing embodiment may implement the process described in step B01 and step B02 in the present invention. The implementation principle and the technical effect thereof are similar, and details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. User equipment, comprising:
an obtaining unit, configured to obtain measurement information of at least one first signal in an unlicensed frequency; and
a sending unit, configured to: after the obtaining unit successfully obtains the measurement information of the at least one first signal, report the measurement information of the at least one first signal to a base station, wherein
the first signal is a signal sent by the base station to the user equipment UE by using the unlicensed frequency.

2. The user equipment according to claim 1, wherein the sending unit is specifically configured to:
after the obtaining unit successfully obtains the measurement information of the at least one first signal, report the measurement information of the at least one first signal to the base station by using a licensed frequency; or
after the obtaining unit successfully obtains the measurement information of the at least one first signal, report the measurement information of the at least one first signal to the base station by using an unlicensed frequency.

3. The user equipment according to claim 1, wherein the user equipment further comprises a receiving unit, wherein
the receiving unit is configured to: before the obtaining unit successfully obtains the measurement information of the at least one first signal, receive first indication information sent by the base station, wherein the first indication information is used to enable the UE to report the measurement information of the first signal; and
the sending unit is specifically configured to report the measurement information of the at least one first signal to the base station according to the first indication information received by the receiving unit; and/or
the receiving unit is configured to: before the obtaining unit successfully obtains the measurement information of the at least one first signal and when the UE is in a connected state, receive a first notification message that is sent by the base station by using a licensed frequency, wherein the first notification message is used to enable the UE to obtain, when in a connected state, the measurement information of the at least one first signal in the unlicensed frequency; and
the obtaining unit is specifically configured to obtain the measurement information of the at least one first signal in the unlicensed frequency when the UE is in a connected state and according to the first notification message received by the receiving unit; and/or
the receiving unit is configured to: before the obtaining unit successfully obtains the measurement information of the at least one first signal and when the UE is in a connected state, receive a second notification message that is sent by the base station by using a licensed frequency, wherein the second notification message is used to enable the UE to obtain, when in an idle state, the measurement information of the at least one first signal in the unlicensed frequency; and
the obtaining unit is specifically configured to obtain the measurement information of the at least one first signal in the unlicensed frequency when the UE is in an idle state and according to the second notification message received by the receiving unit; and/or
the receiving unit is further configured to: before the obtaining unit successfully obtains the measurement information of the at least one first signal, receive a third notification message sent by the base station, wherein the third notification message is used to enable the UE to obtain measurement information of at least one second signal in a licensed frequency, and the second signal is a cell reference signal in the licensed frequency;
the obtaining unit is further configured to obtain the measurement information of the second signal in the licensed frequency according to the third notification message received by the receiving unit; and
the sending unit is further configured to: after the obtaining unit successfully obtains the measurement information of the at least one second signal, report the measurement information of the at least one second signal and the measurement information of the at least one first signal to the base station.

4. The user equipment according to any one of claims 1 to 3, wherein the sending unit is specifically configured to:
after the obtaining unit successfully obtains the measurement information of the at least one first signal and when the measurement information of the at least one first signal is less than a preset threshold, report the measurement information of the at least one first signal to the base station; or
after the obtaining unit successfully obtains the measurement information of the at least one first signal and when the measurement information of the first signal reaches measurement information of a preset period, report measurement information of all first signals within the preset period to the base station.

5. The user equipment according to any one of claims 1 to 4, wherein the sending unit is further configured to:
when the obtaining unit has not obtained the measurement information of the at least one first signal that is sent by the base station by using the unlicensed frequency, send a first message to the base station, wherein the first message comprises information used to indicate that the UE has not obtained the measurement information of the first signal, and/or measurement information, which is already successfully obtained by the UE a time period before the UE sends the first message, of at least one first signal; or
when the obtaining unit fails to detect the at least one first signal that is sent by the base station by using the unlicensed frequency, send a second message to the base station, wherein the second message comprises information used to indicate that the UE fails to detect the first signal, and/or measurement information, which is already successfully obtained by the UE a time period before the UE sends the second message, of at least one first signal.

6. The user equipment according to any one of claims 1 to 5, wherein the first signal is one or more of the following signals:
a primary synchronization signal PSS, a secondary synchronization signal SSS, a discovery signal, or a beacon signal.

7. The user equipment according to any one of claims 1 to 6, wherein the measurement information of the first signal is one or more of the following information:
signal received power RSRP or signal received quality RSRQ.

8. The user equipment according to claim 1, wherein the user equipment further comprises a receiving unit, wherein
the receiving unit is configured to: after the sending unit reports the measurement information of the at least one first signal, receive second indication information sent by the base station, wherein the second indication information is used to enable the UE to obtain use information of the unlicensed frequency and report use information, obtained within a preset time, of the unlicensed frequency;
the obtaining unit is configured to obtain the use information of the unlicensed frequency according to the second indication information received by the receiving unit; and
the sending unit is configured to: after the obtaining unit obtains the use information of the unlicensed frequency, report the use information, obtained within the preset time, of the unlicensed frequency to the base station.

9. The user equipment according to claim 8, wherein the obtaining unit is specifically configured to:
obtain the use information of the unlicensed frequency when the UE is in a connected state and according to the second indication information received by the receiving unit; or
obtain the use information of the unlicensed frequency when the UE is in an idle state and according to the second indication information received by the receiving unit.

10. The user equipment according to claim 8 or 9, wherein the sending unit is specifically configured to:
after the obtaining unit obtains the use information of the unlicensed frequency, report the use information, obtained within the preset time, of the unlicensed frequency to the base station by using a licensed frequency; or
after the obtaining unit obtains the use information of the unlicensed frequency, report the use information, obtained within the preset time, of the unlicensed frequency to the base station by using an unlicensed frequency.

11. The user equipment according to any one of claims 8 to 10, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

12. User equipment, comprising:
a receiving unit, configured to receive third indication information sent by a base station, wherein the third indication information is used to enable the user equipment UE to obtain use information of an unlicensed frequency and report use information, obtained within a preset time, of the unlicensed frequency;
an obtaining unit, configured to obtain the use information of the unlicensed frequency according to the third indication information received by the receiving unit; and
a sending unit, configured to: after the obtaining unit obtains the use information of the unlicensed frequency, report the use information, obtained within the preset time, of the unlicensed frequency to the base station.

13. The user equipment according to claim 12, wherein the obtaining unit is specifically configured to:
obtain the use information of the unlicensed frequency when the UE is in a connected state and according to the third indication information received by the receiving unit; or
obtain the use information of the unlicensed frequency when the UE is in an idle state and according to the third indication information received by the receiving unit.

14. The user equipment according to claim 12 or 13, wherein the sending unit is specifically configured to:
after the obtaining unit obtains the use information of the unlicensed frequency, report the use information, obtained within the preset time, of the unlicensed frequency to the base station by using a licensed frequency; or
after the obtaining unit obtains the use information of the unlicensed frequency, report the use information, obtained within the preset time, of the unlicensed frequency to the base station by using an unlicensed frequency.

15. The user equipment according to any one of claims 12 to 14, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

16. A communications device, comprising:
a sending unit, configured to send at least one first signal to user equipment UE by using an unlicensed frequency; and
a receiving unit, configured to: after the sending unit sends the at least one first signal, receive measurement information reported by the UE, wherein the measurement information is measurement information of the at least one first signal successfully obtained by the UE.

17. The communications device according to claim 16, wherein the receiving unit is specifically configured to:
after the sending unit sends the at least one first signal, receive the measurement information that is reported by the UE by using a licensed frequency; or
after the sending unit sends the at least one first signal, receive the measurement information that is reported by the UE by using an unlicensed frequency.

18. The communications device according to claim 16, wherein the sending unit is further configured to:
before the receiving unit receives the measurement information reported by the UE, send first indication information to the UE, wherein the first indication information is used to enable the UE to report the measurement information of the at least one first signal; and
the receiving unit is specifically configured to:
after the sending unit sends the first indication information, receive the measurement information that is reported by the UE according to the first indication information.

19. The communications device according to claim 16 or 17, wherein the receiving unit is specifically configured to:
after the sending unit sends the at least one first signal, receive the measurement information reported by the UE, wherein the measurement information is sent by the UE when the UE determines that the measurement information of the at least one first signal is less than a preset threshold; or
after the sending unit sends the at least one first signal, receive the measurement information reported by the UE, wherein the measurement information is sent by the UE when the UE determines that the measurement information of the first signal reaches measurement information of a preset period.

20. The communications device according to any one of claims 16 to 19, wherein the sending unit is further configured to:
before sending the at least one first signal, send a first notification message to the UE in a connected state by using a licensed frequency, wherein the first notification message is used to enable the UE to obtain, when in a connected state, the measurement information of the at least one first signal in the unlicensed frequency.

21. The communications device according to any one of claims 16 to 19, wherein the sending unit is further configured to:
before sending the at least one first signal, send a second notification message to the UE in a connected state by using a licensed frequency, wherein the second notification message is used to enable the UE to obtain, when in an idle state, the measurement information of the at least one first signal in the unlicensed frequency.

22. The communications device according to claim 16 or 17, wherein the sending unit is further configured to:
before sending the at least one first signal, send a third notification message to the UE by using a licensed frequency, wherein the third notification message is used to enable the UE to obtain measurement information of a second signal in the licensed frequency, and the second signal is a cell reference signal in the licensed frequency; and
the receiving unit is specifically configured to: after the sending unit sends the third notification message, receive the measurement information of the second signal and the measurement information of the first signal that are reported by the UE.

23. The communications device according to claim 16 or 17, wherein the receiving unit is further configured to:
after the sending unit sends the at least one first signal, receive a first message sent by the UE, wherein the first message is sent by the UE after the UE has not obtained the measurement information of the at least one first signal in the unlicensed frequency, and the first message comprises information used to indicate that the UE has not obtained the measurement information of the first signal, and/or measurement information, which is already successfully obtained by the UE a time period before the UE sends the first message, of at least one first signal; or
after the sending unit sends the at least one first signal, receive a second message sent by the UE, wherein the second message is sent by the UE after the UE fails to detect the at least one first signal in the unlicensed frequency, and the second message comprises information used to indicate that the UE fails to detect the first signal, and/or measurement information, which is already successfully obtained by the UE a time period before the UE sends the second message, of at least one first signal.

24. The communications device according to any one of claims 16 to 23, wherein the first signal is one or more of the following signals:
a primary synchronization signal PSS, a secondary synchronization signal SSS, a discovery signal, or a beacon signal.

25. The communications device according to any one of claims 16 to 24, wherein the measurement information of the first signal is one or more of the following information:
signal received power RSRP or signal received quality RSRQ.

26. The communications device according to claim 16, wherein the sending unit is further configured to:
after the receiving unit receives the measurement information of the at least one first signal, send second indication information to the UE, wherein the second indication information is used to enable the UE to obtain use information of the unlicensed frequency and report use information, obtained within a preset time, of the unlicensed frequency; and
the receiving unit is further configured to:
after the sending unit sends the second indication information, receive the use information reported by the UE, wherein the use information is use information, which is obtained by the UE within the preset time according to the second indication information, of the unlicensed frequency.

27. The communications device according to claim 26, wherein the receiving unit is further configured to:
after the sending unit sends the second indication information, receive the use information that is reported by the UE by using a licensed frequency; or
after the sending unit sends the second indication information, receive the use information that is reported by the UE by using an unlicensed frequency.

28. The communications device according to claim 26 or 27, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

29. A communications device, comprising:
a sending unit, configured to send third indication information to user equipment UE; and
a receiving unit, configured to: after the sending unit sends the third indication information, receive the use information reported by the UE, wherein the use information is use information, which is obtained by the UE within a preset time according to the third indication information, of an unlicensed frequency.

30. The communications device according to claim 29, wherein the receiving unit is specifically configured to:
after the sending unit sends the third indication information, receive the use information that is reported by the UE by using a licensed frequency; or
after the sending unit sends the third indication information, receive the use information that is reported by the UE by using an unlicensed frequency.

31. The communications device according to claim 29 or 30, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

32. User equipment, comprising:
a transmitter and a processor, wherein
the processor is configured to obtain measurement information of at least one first signal in an unlicensed frequency; and
the transmitter is configured to: after the processor successfully obtains the measurement information of the at least one first signal, report the measurement information of the at least one first signal to a base station, wherein
the first signal is a signal sent by the base station to the user equipment UE by using the unlicensed frequency.

33. The user equipment according to claim 32, wherein the transmitter is specifically configured to:
after the processor successfully obtains the measurement information of the at least one first signal, report the measurement information of the at least one first signal to the base station by using a licensed frequency; or
after the processor successfully obtains the measurement information of the at least one first signal, report the measurement information of the at least one first signal to the base station by using an unlicensed frequency.

34. The user equipment according to claim 32, wherein the user equipment further comprises a receiver, wherein
the receiver is configured to: before the processor successfully obtains the measurement information of the at least one first signal, receive first indication information sent by the base station, wherein the first indication information is used to enable the UE to report the measurement information of the first signal; and
the transmitter is specifically configured to report the measurement information of the at least one first signal to the base station according to the first indication information received by the receiver; and/or
the receiver is configured to: before the processor successfully obtains the measurement information of the at least one first signal and when the UE is in a connected state, receive a first notification message that is sent by the base station by using a licensed frequency, wherein the first notification message is used to enable the UE to obtain, when in a connected state, the measurement information of the at least one first signal in the unlicensed frequency; and
the processor is specifically configured to obtain the measurement information of the at least one first signal in the unlicensed frequency when the UE is in a connected state and according to the first notification message received by the receiver; and/or
the receiver is configured to: before the processor successfully obtains the measurement information of the at least one first signal and when the UE is in a connected state, receive a second notification message that is sent by the base station by using a licensed frequency, wherein the second notification message is used to enable the UE to obtain, when in an idle state, the measurement information of the at least one first signal in the unlicensed frequency; and
the processor is specifically configured to obtain the measurement information of the at least one first signal in the unlicensed frequency when the UE is in an idle state and according to the second notification message received by the receiver; and/or
the receiver is further configured to: before the processor successfully obtains the measurement information of the at least one first signal, receive a third notification message sent by the base station, wherein the third notification message is used to enable the UE to obtain measurement information of at least one second signal in a licensed frequency, and the second signal is a cell reference signal in the licensed frequency;
the processor is further configured to obtain the measurement information of the second signal in the licensed frequency according to the third notification message received by the receiver; and
the transmitter is further configured to: after the processor successfully obtains the measurement information of the at least one second signal, report the measurement information of the at least one second signal and the measurement information of the at least one first signal to the base station.

35. The user equipment according to any one of claims 32 to 34, wherein the transmitter is specifically configured to:
after the processor successfully obtains the measurement information of the at least one first signal and when the measurement information of the at least one first signal is less than a preset threshold, report the measurement information of the at least one first signal to the base station; or
after the processor successfully obtains the measurement information of the at least one first signal and when the measurement information of the first signal reaches measurement information of a preset period, report measurement information of all first signals within the preset period to the base station.

36. The user equipment according to any one of claims 32 to 35, wherein the transmitter is further configured to:
when the processor has not obtained the measurement information of the at least one first signal that is sent by the base station by using the unlicensed frequency, send a first message to the base station, wherein the first message comprises information used to indicate that the UE has not obtained the measurement information of the first signal, and/or measurement information, which is already successfully obtained by the UE a time period before the UE sends the first message, of at least one first signal; or
when the processor fails to detect the at least one first signal that is sent by the base station by using the unlicensed frequency, send a second message to the base station, wherein the second message comprises information used to indicate that the UE fails to detect the first signal, and/or measurement information, which is already successfully obtained by the UE a time period before the UE sends the second message, of at least one first signal.

37. The user equipment according to any one of claims 32 to 36, wherein the first signal is one or more of the following signals:
a primary synchronization signal PSS, a secondary synchronization signal SSS, a discovery signal, or a beacon signal.

38. The user equipment according to any one of claims 32 to 37, wherein the measurement information of the first signal is one or more of the following information:
signal received power RSRP or signal received quality RSRQ.

39. The user equipment according to claim 32, wherein the user equipment further comprises a receiver, wherein
the receiver is configured to: after the transmitter reports the measurement information of the at least one first signal, receive second indication information sent by the base station, wherein the second indication information is used to enable the UE to obtain use information of the unlicensed frequency and report use information, obtained within a preset time, of the unlicensed frequency;
the processor is configured to obtain the use information of the unlicensed frequency according to the second indication information received by the receiver; and
the transmitter is configured to: after the processor obtains the use information of the unlicensed frequency, report the use information, obtained within the preset time, of the unlicensed frequency to the base station.

40. The user equipment according to claim 39, wherein the processor is specifically configured to:
obtain the use information of the unlicensed frequency when the UE is in a connected state and according to the second indication information received by the receiver; or
obtain the use information of the unlicensed frequency when the UE is in an idle state and according to the second indication information received by the receiver.

41. The user equipment according to claim 39 or 40, wherein the transmitter is specifically configured to:
after the processor obtains the use information of the unlicensed frequency, report the use information, obtained within the preset time, of the unlicensed frequency to the base station by using a licensed frequency; or
after the processor obtains the use information of the unlicensed frequency, report the use information, obtained within the preset time, of the unlicensed frequency to the base station by using an unlicensed frequency.

42. The user equipment according to any one of claims 39 to 41, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

43. User equipment, comprising:
a receiver, configured to receive third indication information sent by a base station, wherein the third indication information is used to enable the user equipment UE to obtain use information of an unlicensed frequency and report use information, obtained within a preset time, of the unlicensed frequency;
a processor, configured to obtain the use information of the unlicensed frequency according to the third indication information received by the receiver; and
a transmitter, configured to: after the processor obtains the use information of the unlicensed frequency, report the use information, obtained within the preset time, of the unlicensed frequency to the base station.

44. The user equipment according to claim 43, wherein the processor is specifically configured to:
obtain the use information of the unlicensed frequency when the UE is in a connected state and according to the third indication information received by the receiver; or
obtain the use information of the unlicensed frequency when the UE is in an idle state and according to the third indication information received by the receiver.

45. The user equipment according to claim 43 or 44, wherein the transmitter is specifically configured to:
after the processor obtains the use information of the unlicensed frequency, report the use information, obtained within the preset time, of the unlicensed frequency to the base station by using a licensed frequency; or
after the processor obtains the use information of the unlicensed frequency, report the use information, obtained within the preset time, of the unlicensed frequency to the base station by using an unlicensed frequency.

46. The user equipment according to any one of claims 43 to 45, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

47. A communications device, comprising:
a transmitter, configured to send at least one first signal to user equipment UE by using an unlicensed frequency; and
a receiver, configured to: after the transmitter sends the at least one first signal, receive measurement information reported by the UE, wherein the measurement information is measurement information of the at least one first signal successfully obtained by the UE.

48. The communications device according to claim 47, wherein the receiver is specifically configured to:
after the transmitter sends the at least one first signal, receive the measurement information that is reported by the UE by using a licensed frequency; or
after the transmitter sends the at least one first signal, receive the measurement information that is reported by the UE by using an unlicensed frequency.

49. The communications device according to claim 47, wherein the transmitter is further configured to:
before the receiver receives the measurement information reported by the UE, send first indication information to the UE, wherein the first indication information is used to enable the UE to report the measurement information of the at least one first signal; and
the receiver is specifically configured to:
after the transmitter sends the first indication information, receive the measurement information that is reported by the UE according to the first indication information.

50. The communications device according to claim 47 or 48, wherein the receiver is specifically configured to:
after the transmitter sends the at least one first signal, receive the measurement information reported by the UE, wherein the measurement information is sent by the UE when the UE determines that the measurement information of the at least one first signal is less than a preset threshold; or
after the transmitter sends the at least one first signal, receive the measurement information reported by the UE, wherein the measurement information is sent by the UE when the UE determines that the measurement information of the first signal reaches measurement information of a preset period.

51. The communications device according to any one of claims 47 to 50, wherein the transmitter is further configured to:
before sending the at least one first signal, send a first notification message to the UE in a connected state by using a licensed frequency, wherein the first notification message is used to enable the UE to obtain, when in a connected state, the measurement information of the at least one first signal in the unlicensed frequency.

52. The communications device according to any one of claims 47 to 50, wherein the transmitter is further configured to:
before sending the at least one first signal, send a second notification message to the UE in a connected state by using a licensed frequency, wherein the second notification message is used to enable the UE to obtain, when in an idle state, the measurement information of the at least one first signal in the unlicensed frequency.

53. The communications device according to claim 47 or 48, wherein the transmitter is further configured to:
before sending the at least one first signal, send a third notification message to the UE by using a licensed frequency, wherein the third notification message is used to enable the UE to obtain measurement information of a second signal in the licensed frequency, and the second signal is a cell reference signal in the licensed frequency; and
the receiver is specifically configured to: after the transmitter sends the third notification message, receive the measurement information of the second signal and the measurement information of the first signal that are reported by the UE.

54. The communications device according to claim 47 or 48, wherein the receiver is further configured to:
after the transmitter sends the at least one first signal, receive a first message sent by the UE, wherein the first message is sent by the UE after the UE has not obtained the measurement information of the at least one first signal in the unlicensed frequency, and the first message comprises information used to indicate that the UE has not obtained the measurement information of the first signal, and/or measurement information, which is already successfully obtained by the UE a time period before the UE sends the first message, of at least one first signal; or
after the transmitter sends the at least one first signal, receive a second message sent by the UE, wherein the second message is sent by the UE after the UE fails to detect the at least one first signal in the unlicensed frequency, and the second message comprises information used to indicate that the UE fails to detect the first signal, and/or measurement information, which is already successfully obtained by the UE a time period before the UE sends the second message, of at least one first signal.

55. The communications device according to any one of claims 47 to 54, wherein the first signal is one or more of the following signals:
a primary synchronization signal PSS, a secondary synchronization signal SSS, a discovery signal, or a beacon signal.

56. The communications device according to any one of claims 47 to 55, wherein the measurement information of the first signal is one or more of the following information:
signal received power RSRP or signal received quality RSRQ.

57. The communications device according to claim 47, wherein the transmitter is further configured to:
after the receiver receives the measurement information of the at least one first signal, send second indication information to the UE, wherein the second indication information is used to enable the UE to obtain use information of the unlicensed frequency and report use information, obtained within a preset time, of the unlicensed frequency; and
the receiver is further configured to:
after the transmitter sends the second indication information, receive the use information reported by the UE, wherein the use information is use information, which is obtained by the UE within the preset time according to the second indication information, of the unlicensed frequency.

58. The communications device according to claim 57, wherein the receiver is further configured to:
after the transmitter sends the second indication information, receive the use information that is reported by the UE by using a licensed frequency; or
after the transmitter sends the second indication information, receive the use information that is reported by the UE by using an unlicensed licensed frequency.

59. The communications device according to claim 57 or 58, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

60. A communications device, comprising:
a transmitter, configured to send third indication information to user equipment UE; and
a receiver, configured to: after the transmitter sends the third indication information, receive use information reported by the UE, wherein the use information is use information, which is obtained by the UE within a preset time according to the third indication information, of an unlicensed frequency.

61. The communications device according to claim 60, wherein the receiver is specifically configured to:
after the transmitter sends the third indication information, receive the use information that is reported by the UE by using a licensed frequency; or
after the transmitter sends the third indication information, receive the use information that is reported by the UE by using an unlicensed licensed frequency.

62. The communications device according to claim 60 or 61, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

63. A method for obtaining unlicensed frequency information, comprising:
obtaining, by user equipment UE, measurement information of at least one first signal in an unlicensed frequency; and
after the UE successfully obtains the measurement information of the at least one first signal, reporting the measurement information of the at least one first signal to a base station, wherein
the first signal is a signal sent by the base station to the UE by using the unlicensed frequency.

64. The method according to claim 63, wherein the reporting the measurement information of the at least one first signal to a base station comprises:
reporting the measurement information of the at least one first signal to the base station by using a licensed frequency; or
reporting the measurement information of the at least one first signal to the base station by using an unlicensed frequency.

65. The method according to claim 63, wherein before the reporting the measurement information of the at least one first signal to a base station, the method further comprises:
receiving, by the UE, first indication information sent by the base station, wherein the first indication information is used to enable the UE to report the measurement information of the first signal; and
correspondingly, the reporting the measurement information of the at least one first signal to a base station is specifically:
reporting, by the UE, the measurement information of the first signal to the base station according to the first indication information.

66. The method according to any one of claims 63 to 65, wherein the reporting the measurement information of the at least one first signal to a base station comprises:
when the measurement information of the at least one first signal is less than a preset threshold, reporting the measurement information of the at least one first signal to the base station; or
when the measurement information of the first signal reaches measurement information of a preset period, reporting measurement information of all signals within the preset period to the base station.

67. The method according to any one of claims 63 to 66, wherein before the obtaining, by UE, measurement information of at least one first signal in an unlicensed frequency, the method further comprises:
when the UE is in a connected state, receiving a first notification message that is sent by the base station by using a licensed frequency, wherein the first notification message is used to enable the UE to obtain, when in a connected state, the measurement information of the at least one first signal in the unlicensed frequency; and
the obtaining, by UE, measurement information of at least one first signal in an unlicensed frequency is specifically:
obtaining, by the UE, the measurement information of the at least one first signal when the UE is in a connected state and according to the first notification message.

68. The method according to any one of claims 63 to 66, wherein before the obtaining, by UE, measurement information of at least one first signal in an unlicensed frequency, the method further comprises:
when the UE is in a connected state, receiving a second notification message that is sent by the base station by using a licensed frequency, wherein the second notification message is used to enable the UE to obtain, when in an idle state, the measurement information of the at least one first signal in the unlicensed frequency; and
the obtaining, by UE, measurement information of at least one first signal in an unlicensed frequency is specifically:
obtaining, by the UE, the measurement information of the at least one first signal when the UE is in an idle state and according to the second notification message.

69. The method according to claim 63 or 64, wherein before the obtaining, by UE, measurement information of at least one first signal in an unlicensed frequency, the method further comprises:
receiving, by the UE, a third notification message sent by the base station, wherein the third notification message is used to enable the UE to obtain measurement information of at least one second signal in a licensed frequency, and the second signal is a cell reference signal in the licensed frequency; and
obtaining, by the UE, the measurement information of the second signal in the licensed frequency according to the third notification message; and
correspondingly, the reporting the measurement information of the at least one first signal to a base station comprises:
reporting the measurement information of the at least one second signal and the measurement information of the at least one first signal to the base station.

70. The method according to claim 63 or 64, wherein the method further comprises:
if the UE has not obtained the measurement information of the at least one first signal that is sent by the base station by using the unlicensed frequency, sending a first message to the base station, wherein the first message comprises information used to indicate that the UE has not obtained the measurement information of the first signal, and/or measurement information, which is already successfully obtained by the UE a time period before the UE sends the first message, of at least one first signal; or
if the UE fails to detect the at least one first signal that is sent by the base station by using the unlicensed frequency, send a second message to the base station, wherein the second message comprises information used to indicate that the UE fails to detect the first signal, and/or measurement information, which is already successfully obtained by the UE a time period before the UE sends the second message, of at least one first signal.

71. The method according to any one of claims 63 to 70, wherein the first signal is one or more of the following signals:
a primary synchronization signal PSS, a secondary synchronization signal SSS, a discovery signal, or a beacon signal.

72. The method according to any one of claims 63 to 71, wherein the measurement information of the first signal is one or more of the following information:
signal received power RSRP or signal received quality RSRQ.

73. The method according to claim 63, wherein the method further comprises:
receiving, by the UE, second indication information sent by the base station, wherein the second indication information is used to enable the UE to obtain use information of the unlicensed frequency and report use information, obtained within a preset time, of the unlicensed frequency;
obtaining, by the UE, the use information of the unlicensed frequency according to the second indication information; and
reporting the use information, obtained within the preset time, of the unlicensed frequency to the base station.

74. The method according to claim 73, wherein the obtaining, by the UE, the use information of the unlicensed frequency according to the second indication information comprises:
obtaining, by the UE, the use information of the unlicensed frequency when the UE is in a connected state and according to the second indication information; or
obtaining, by the UE, the use information of the unlicensed frequency when the UE is in an idle state and according to the second indication information.

75. The method according to claim 73 or 74, wherein the reporting the use information, obtained within the preset time, of the unlicensed frequency to the base station comprises:
reporting the use information, obtained within the preset time, of the unlicensed frequency to the base station by using a licensed frequency; or
reporting the use information, obtained within the preset time, of the unlicensed frequency to the base station by using an unlicensed frequency.

76. The method according to any one of claims 73 to 75, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

77. A method for obtaining unlicensed frequency information, comprising:
receiving, by user equipment UE, third indication information sent by a base station, wherein the third indication information is used to enable the UE to obtain use information of an unlicensed frequency and report use information, obtained within a preset time, of the unlicensed frequency;
obtaining, by the UE, the use information of the unlicensed frequency according to the third indication information; and
reporting the use information, obtained within the preset time, of the unlicensed frequency to the base station.

78. The method according to claim 77, wherein the obtaining, by the UE, the use information of the unlicensed frequency according to second indication information comprises:
obtaining, by the UE, the use information of the unlicensed frequency when the UE is in a connected state and according to the second indication information; or
obtaining, by the UE, the use information of the unlicensed frequency when the UE is in an idle state and according to the second indication information.

79. The method according to claim 77 or 78, wherein the reporting the use information, obtained within the preset time, of the unlicensed frequency to the base station comprises:
reporting the use information, obtained within the preset time, of the unlicensed frequency to the base station by using a licensed frequency; or
reporting the use information, obtained within the preset time, of the unlicensed frequency to the base station by using an unlicensed frequency.

80. The method according to any one of claims 77 to 79, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

81. A method for obtaining unlicensed frequency information, comprising:
sending, by a base station, at least one first signal to user equipment UE by using an unlicensed frequency and receiving, by the base station, measurement information reported by the UE, wherein the measurement information is measurement information of the at least one first signal successfully obtained by the UE.

82. The method according to claim 81, wherein the receiving, by the base station, measurement information reported by the UE comprises:
receiving, by the base station, the measurement information that is reported by the UE by using a licensed frequency; or
receiving, by the base station, the measurement information that is reported by the UE by using an unlicensed frequency.

83. The method according to claim 81, wherein before the receiving, by the base station, measurement information reported by the UE, the method further comprises:
sending, by the base station, first indication information to the UE, wherein the first indication information is used to enable the UE to report the measurement information of the at least one first signal; and
correspondingly, the receiving, by the base station, measurement information reported by the UE is specifically:
receiving, by the base station, the measurement information that is reported by the UE according to the first indication information.

84. The method according to claim 81 or 82, wherein the receiving, by the base station, measurement information reported by the UE comprises:
receiving, by the base station, the measurement information reported by the UE, wherein the measurement information is sent by the UE when the UE determines that the measurement information of the at least one first signal is less than a preset threshold; or
receiving, by the base station, the measurement information reported by the UE, wherein the measurement information is sent by the UE when the UE determines that the measurement information of the first signal reaches measurement information of a preset period.

85. The method according to any one of claims 81 to 84, wherein before the sending, by a base station, at least one first signal to user equipment UE by using an unlicensed frequency, the method further comprises:
sending, by the base station, a first notification message to the UE in a connected state by using a licensed frequency, wherein the first notification message is used to enable the UE to obtain, when in a connected state, the measurement information of the at least one first signal in the unlicensed frequency.

86. The method according to any one of claims 81 to 84, wherein before the sending, by a base station, at least one first signal to user equipment UE by using an unlicensed frequency, the method further comprises:
sending, by the base station, a second notification message to the UE in a connected state by using a licensed frequency, wherein the second notification message is used to enable the UE to obtain, when in an idle state, the measurement information of the at least one first signal in the unlicensed frequency.

87. The method according to claim 81 or 82, wherein before the sending, by a base station, at least one first signal to user equipment UE by using an unlicensed frequency, the method further comprises:
sending, by the base station, a third notification message to the UE by using a licensed frequency, wherein the third notification message is used to enable the UE to obtain measurement information of a second signal in the licensed frequency, and the second signal is a cell reference signal in the licensed frequency; and
the receiving, by the base station, measurement information reported by the UE comprises:
receiving, by the base station, the measurement information of the second signal and the measurement information of the first signal that are reported by the UE.

88. The method according to claim 81 or 82, wherein the method further comprises:
receiving, by the base station, a first message sent by the UE, wherein the first message is sent by the UE after the UE has not obtained the measurement information of the at least one first signal in the unlicensed frequency, and the first message comprises information used to indicate that the UE has not obtained the measurement information of the first signal, and/or measurement information, which is already successfully obtained by the UE a time period before the UE sends the first message, of at least one first signal; or
receiving, by the base station, a second message sent by the UE, wherein the second message is sent by the UE after the UE fails to detect the at least one first signal in the unlicensed frequency, and the second message comprises information used to indicate that the UE fails to detect the first signal, and/or measurement information, which is already successfully obtained by the UE a time period before the UE sends the first message, of at least one first signal.

89. The method according to any one of claims 81 to 88, wherein the first signal is one or more of the following signals:
a primary synchronization signal PSS, a secondary synchronization signal SSS, a discovery signal, or a beacon signal.

90. The method according to any one of claims 81 to 89, wherein the measurement information of the first signal is one or more of the following information:
signal received power RSRP or signal received quality RSRQ.

91. The method according to claim 81, wherein the method further comprises:
sending, by the base station, second indication information to the UE, wherein the second indication information is used to enable the UE to obtain use information of the unlicensed frequency and report use information, obtained within a preset time, of the unlicensed frequency; and
receiving, by the base station, the use information reported by the UE, wherein the use information is use information, which is obtained by the UE within the preset time according to the second indication information, of the unlicensed frequency.

92. The method according to claim 91, wherein the receiving, by the base station, the use information reported by the UE comprises:
receiving, by the base station, the use information that is reported by the UE by using a licensed frequency; or
receiving, by the base station, the use information that is reported by the UE by using an unlicensed frequency.

93. The method according to claim 91 or 92, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.

94. A method for obtaining unlicensed frequency information, comprising:
sending, by a base station, third indication information to user equipment UE, and receiving, by the base station, use information reported by the UE, wherein the use information is use information, which is obtained by the UE within a preset time according to the third indication information, of an unlicensed frequency.

95. The method according to claim 94, wherein the receiving, by the base station, use information reported by the UE comprises:
receiving, by the base station, the use information that is reported by the UE by using a licensed frequency; or
receiving, by the base station, the use information that is reported by the UE by using an unlicensed frequency.

96. The method according to claim 94 or 95, wherein the use information of the unlicensed frequency comprises one or more of the following information:
a system using the unlicensed frequency, a type of a terminal using the unlicensed frequency, duration of using the unlicensed frequency, signal power detected by the UE when the unlicensed frequency is occupied, timestamp information when the UE receives a signal, and geographical location information of the UE.
